# EUROPEAN PATENT APPLICATION

(11) **EP 4 583 429 A1**
(43) Date of publication of application: **09.07.2025**
(21) Application number: 23870951.3
(22) Date of filing: 27.09.2023
(51) Int. Cl.: H04B 10/40, H04J 14/02

(54) **FIRST TWO-WAY COMMUNICATION DEVICE AND TWO-WAY COMMUNICATION SYSTEM**

(30) Priority: 29.09.2022 CN 202211197403
(71) Applicant: Changzhou United Imaging Surgical Co., Ltd., Changzhou, Jiangsu 213000 (CN)
(72) Inventor: YANG, Miao, Changzhou, Jiangsu 213000 (CN); HU, Xianlong, Changzhou, Jiangsu 213000 (CN); YU, Kui, Changzhou, Jiangsu 213000 (CN); WANG, Ke, Changzhou, Jiangsu 213000 (CN)
(74) Representative: Wang, Bo
(86) International application number: PCT/CN2023/122156
(87) International publication number: WO 2024/067724

(57) **Abstract**

The present disclosure relate to a first bidirectional communication device applied to a bidirectional communication system. The first bidirectional communication device comprises a first signal transmitter configured to transmit a first optical signal; a first signal receiver configured to receive a second optical signal from a second bidirectional communication device of the bidirectional communication system; a first beam splitter configured to transmit at least a portion of the first optical signal and reflect at least a portion of the second optical signal; and a first optical lens disposed between the first beam splitter and the second bidirectional communication device. The first optical lens includes a collimating lens and/or a diverging lens.

## Description

### CROSS REFERENCE TO RELATED APPLICATIONS

The present disclosure claims priority to Chinese application No. 202211197403.0, filed on September 29, 2022, the entire contents of which are incorporated herein by reference.

### TECHNICAL FIELD

The present disclosure relates to the field of wireless communication technology, and in particular, to a first bidirectional communication device and a bidirectional communication system.

### BACKGROUND

Existing communication systems typically use electrical connections (metal contacts) to enable communication between a system master and a system slave. However, this approach has several drawbacks: over time, and under the influence of operational conditions, metal contacts can corrode and rust, which often leads to communication failures and adversely affects the long-term reliability of the existing communication systems.

To address these issues, the present disclosure introduces a first bidirectional communication device and a bidirectional communication system. In this system, both the first bidirectional communication device and a second bidirectional communication device employ optical communication, allowing for complete separation between the system master and the system slave, while providing excellent waterproofing for both components. Additionally, the bidirectional communication system is highly integrated, supporting wavelength division multiplexing (WDM) for high signal transmission rates and enabling two-way signal transmission between the system master and the system slave.

### SUMMARY

Embodiments of the present disclosure provide a first bidirectional communication device applied to a bidirectional communication system. The first bidirectional communication device comprises: a first signal transmitter, configured to transmit a first optical signal; a first signal receiver, configured to receive a second optical signal transmitted from a second bidirectional communication device of the bidirectional communication system; a first beam splitter, configured to transmit at least a portion of the first optical signal and reflect at least a portion of the second optical signal; and a first optical lens, located between the first beam splitter and the second bidirectional communication device. The first optical lens includes a collimating lens and/or a diverging lens.

In some embodiments, the first optical lens includes a first collimating lens configured to collimate the first optical signal and couple the second optical signal.

In some embodiments, the first optical lens includes a first diverging lens configured to diverge the first optical signal and couple the second optical signal.

In some embodiments, the first optical lens includes a first collimating lens and a first diverging lens. The first diverging lens is configured to diverge the first optical signal, and transmit the diverged first optical signal to be incident on the first collimating lens. The first collimating lens is configured to collimate the first optical signal; and the first collimating lens and the first diverging lens are further configured to couple the second optical signal.

In some embodiments, along a direction of a center axis of the second optical signal, a projection area of the second optical signal on the first collimating lens is a first area; a lens area of the first collimating lens is a second area; and a ratio of the first area to the second area is greater than or equal to a first predetermined ratio.

In some embodiments, a cross-sectional dimension of a beam of the first optical signal at an emission end surface of the first optical lens is a first cross-sectional dimension, a cross-sectional dimension of the beam of the first optical signal at an incident end surface of the first optical lens is a second cross-sectional dimension, and the first cross-sectional dimension is greater than the second cross-sectional dimension.

In some embodiments, a divergence angle of a beam of the first optical signal transmitted from the first optical lens is a first divergence angle, and a divergence angle of the beam of the first optical signal incident on the first optical lens is a second divergence angle. The first divergence angle is greater than the second divergence angle.

In some embodiments, both the first optical signal and the second optical signal include at least one wavelength, and wavelengths included in the first optical signal and the second optical signal are not entirely identical.

In some embodiments, both the first optical signal and the second optical signal include one wavelength, and wavelengths of the first optical signal and the second optical signal are different.

In some embodiments, both the first optical signal and the second optical signal include a plurality of wavelengths, and the first optical signal and the second optical signal include at least one different wavelength.

**In** some embodiments, the first bidirectional communication device further comprises a first filter, the first filter is disposed at an emission end of the first signal transmitter and is configured to filter the first optical signal to obtain a filtered first optical signal, such that the filtered first optical signal and the second optical signal includes at least one different wavelength; and/or the first bidirectional communication device further comprises a second filter, the second filter is disposed at an incident end of the first signal receiver and is configured to filter the second optical signal to obtain a filtered second optical signal, such that the filtered second optical signal and the first optical signal includes at least one different wavelength.

**In** some embodiments, a sensitive range of the first signal receiver and a sensitive range of a second signal receiver of the second bidirectional communication device are completely independent and do not overlap.

In some embodiments, both the first optical signal and the second optical signal include a plurality of identical wavelengths, and a sensitive range of the first signal receiver and a sensitive range of a second signal receiver of the second bidirectional communication device are completely independent and do not overlap.

In some embodiments, the first beam splitter is further configured to reflect at least a portion of the second optical signal to the first signal receiver.

In some embodiments, the first beam splitter is configured to fully transmit the first optical signal and fully reflect the second optical signal to the first signal receiver.

In some embodiments, an angle between the first beam splitter and a center axis of the first signal transmitter is 45 degrees.

In some embodiments, the first bidirectional communication device further comprises a second beam splitter, the second beam splitter is disposed at an incident end of the first signal receiver and is configured to isolate the first signal receiver from interference from an external signal.

In some embodiments, an angle between the second beam splitter and a center axis of the first signal transmitter is 0 degrees.

In some embodiments, the first bidirectional communication device further comprises a first isolator, the first isolator is located at an emission end of the first signal transmitter and is configured to isolate the first signal transmitter from interference from an external signal.

In some embodiments, a divergence angle of the first optical signal transmitted from the first optical lens and a divergence angle of the second optical signal are the same.

In some embodiments, the first bidirectional communication device includes a wireless energy receiving coil, and the second bidirectional communication device includes a wireless energy transmitting coil, and the wireless energy transmitting coil and the wireless energy receiving coil are arranged in correspondence to achieve contactless energy transfer; or, the first bidirectional communication device includes the wireless energy transmitting coil, and the second bidirectional communication device includes the wireless energy receiving coil, and the wireless energy transmitting coil and the wireless energy receiving coil are arranged in correspondence to achieve contactless energy transfer.

Embodiments of the present disclosure provide a bidirectional communication system, comprising a first bidirectional communication device and a second bidirectional communication device configured to realize contactless bidirectional communication with the first bidirectional communication device, the first bidirectional communication device comprising: a first signal transmitter, configured to transmit a first optical signal; a first signal receiver, configured to receive a second optical signal transmitted from the second bidirectional communication device; a first beam splitter, configured to transmit at least a portion of the first optical signal and reflect at least a portion of the second optical signal; and a first optical lens, including a collimating lens and/or a diverging lens; the second bidirectional communication device including: a second signal transmitter, configured to transmit the second optical signal; a second signal receiver, configured to receive the first optical signal transmitted from the first bidirectional communication device; a third beam splitter, configured to transmit at least a portion of the second optical signal and reflect at least a portion of the first optical signal; and a second optical lens, including a collimating lens and/or a diverging lens.

In some embodiments, the first optical lens includes a first collimating lens, configured to collimate the first optical signal and couple the second optical signal.

In some embodiments, the first optical lens includes a first diverging lens, configured to diverge the first optical signal and couple the second optical signal.

In some embodiments, the first optical lens includes a first collimating lens and a first diverging lens, the first diverging lens is configured to diverge the first optical signal, and transmit the diverged first optical signal to be incident on the first collimating lens, the first collimating lens is configured to collimate the first optical signal, and the first collimating lens and the first diverging lens are further configured to couple the second optical signal.

In some embodiments, the second optical lens includes a second collimating lens configured to collimate the second optical signal and couple the first optical signal.

In some embodiments, the second optical lens includes a second diverging lens configured to diverge the second optical signal and couple the first optical signal.

In some embodiments, the second optical lens includes a second diverging lens and a second collimating lens, the second diverging lens is configured to diverge the second optical signal, and transmit the diverged second optical signal to be incident on the second collimating lens, the second collimating lens is configured to collimate the second optical signal, and the second collimating lens and the second diverging lens are further configured to couple the first optical signal.

In some embodiments, a divergence angle of the first optical signal transmitted from the first optical lens and a divergence angle of the second optical signal transmitted from the second optical lens are the same.

In some embodiments, the first optical splitter is also configured to reflect at least a portion of the second optical signal to the first signal receiver; and/or the third optical splitter is further configured to reflect at least a portion of the first optical signal to the second signal receiver.

In some embodiments, the first bidirectional communication device further includes a second optical splitter, the second optical splitter is located at an incident end of the first signal receiver and is configured to isolate the first signal receiver from interference from an external signal; and/or, the second bidirectional communication device further includes a fourth optical splitter, the fourth optical splitter is located at an incident end of the second signal receiver and is configured to isolate the second signal receiver from interference from the external signal.

In some embodiments, the first bidirectional communication device further includes a first isolator, the first isolator is located at an emission end of the first signal transmitter and is configured to isolate the first signal transmitter from interference from the external signal; and/or, the second bidirectional communication device further includes a second isolator, the second isolator is located at an emission end of the second signal transmitter and is configured to isolate the second signal transmitter from interference from the external signal.

In some embodiments, the first bidirectional communication device comprises a wireless energy receiving coil, and the second bidirectional communication device includes a wireless energy transmitting coil, and the wireless energy transmitting coil and the wireless energy receiving coil are arranged in correspondence to achieve contactless energy transfer; or, the first bidirectional communication device comprises the wireless energy transmitting coil, and the second bidirectional communication device includes the wireless energy receiving coil, and the wireless energy transmitting coil and the wireless energy receiving coil are arranged in correspondence to achieve contactless energy transfer.

In some embodiments, the first bidirectional communication device includes a light guide rod and a gas nozzle, the first bidirectional communication device includes a light conductor, the light guide rod connects a light source with an interior of the first bidirectional communication device, the light conductor connects the interior of the first bidirectional communication device with a distal end of the first bidirectional communication device, and the gas nozzle connects the first bidirectional communication device with external environment.

### BRIEF DESCRIPTION OF THE DRAWINGS

The present disclosure will be further illustrated by way of exemplary embodiments, which are described in detail by means of the accompanying drawings. These embodiments are not limiting, and in these embodiments, the same numbering denotes the same structure, where:
FIG. 1 is a schematic diagram illustrating modules of a bidirectional communication system according to some embodiments of the present disclosure;
FIG. 2 is a schematic diagram illustrating modules of a bidirectional communication system applied to an endoscopy system according to some embodiments of the present disclosure;
FIG. 3 is a schematic diagram illustrating an exemplary structure of a first bidirectional communication device disposed in an endoscope according to some embodiments of the present disclosure;
FIG. 4 is a schematic diagram illustrating an exemplary structure of a first bidirectional communication device disposed in an endoscope according to some other embodiments of the present disclosure;
FIG. 5 is a schematic diagram illustrating the first bidirectional communication device, which is disposed in the endoscope shown as shown in FIG. 4, receiving a second optical signal according to some other embodiments of the present disclosure;
FIG. 6 is a schematic diagram illustrating the first bidirectional communication device, which is disposed in the endoscope as shown in FIG. 4, receiving a second optical signal and transmitting a first optical signal simultaneously according to some other embodiments of the present disclosure;
FIG. 7 is a schematic diagram illustrating an exemplary structure of a first bidirectional communication device disposed in an endoscope according to some embodiments of the present disclosure;
FIG. 8 is a schematic diagram illustrating an exemplary structure of a second bidirectional communication device disposed in a system master according to some embodiments of the present disclosure;
FIG. 9 is a schematic diagram illustrating an exemplary structure of a second bidirectional communication device disposed in a system master according to some other embodiments of the present disclosure;
FIG. 10 is a schematic diagram illustrating an exemplary structure of a second bidirectional communication device disposed in a system master according to some other embodiments of the present disclosure;
FIG. 11 is a schematic diagram illustrating an exemplary structure of a bidirectional communication system according to some embodiments of the present disclosure;
FIG. 12 is a schematic diagram illustrating an exemplary structure of a bidirectional communication system according to some other embodiments of the present disclosure;
FIG. 13 is a schematic diagram illustrating a positional relationship between a first bidirectional communication device disposed in an endoscope body and a second bidirectional communication device disposed in a system master according to some embodiments of the present disclosure;
FIG. 14 is a schematic diagram illustrating a positional relationship between a first bidirectional communication device disposed in an endoscope body and a second bidirectional communication device disposed in a system master according to some other embodiments of the present disclosure;
FIG. 15 is a schematic diagram illustrating modules of an endoscope system according to some embodiments of the present disclosure;
FIG. 16 is a schematic diagram illustrating an exemplary structure of an endoscope system according to some embodiments of the present disclosure;
FIG. 17 is a schematic diagram illustrating a main view of a communication connector of a system master according to some embodiments of the present disclosure;
FIG. 18 is a schematic diagram illustrating a top view of a communication connector of a system master according to some embodiments of the present disclosure;
FIG. 19 is a schematic diagram illustrating a main view of a communication connector of a system master according to some other embodiments of the present disclosure; and
FIG. 20 is a schematic diagram illustrating a top view of a communication connector of a system master according to some other embodiments of the present disclosure.

### DETAILED DESCRIPTION

In order to more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and it is possible for a person of ordinary skill in the art to apply the present disclosure to other similar scenarios in accordance with these drawings without creative labor. Unless obviously obtained from the context or the context illustrates otherwise, the same numeral in the drawings refers to the same structure or operation.

As shown in the present disclosure and in the claims, unless the context clearly suggests an exception, the words "a," "an," "one," and/or "the" do not refer specifically to the singular, but may also include the plural. Generally, the terms "including," and "comprising" suggest only the inclusion of clearly identified steps and elements that do not constitute an exclusive list, and the method or device may also include other steps or elements.

The present disclosure provides a bidirectional communication system in which data transmission between a system master and a system slave is carried out through wireless optical communication. The bidirectional communication system is capable of increasing the transmission distance of optical signals transmitted from the system master and the system slave, reducing the effect of the distance between the system master and the system slave on the quality of the transmitted optical signals, and facilitating the flexible adjustment of the distance between the system master and the system slave. In addition, the bidirectional communication system has a high degree of integration, and is capable of realizing wavelength-division multiplexing, which in turn is capable of realizing bidirectional transmission of optical signals within a same optical communication link, and reducing the count of communication links.

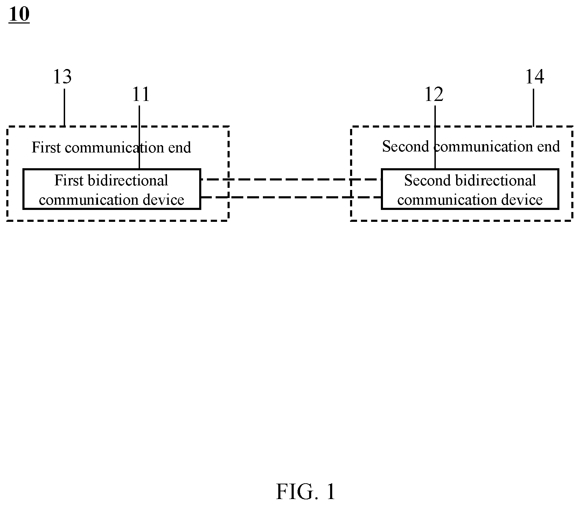

FIG. 1 is a schematic diagram illustrating modules of a bidirectional communication system according to some embodiments of the present disclosure. As shown in FIG. 1, a bidirectional communication system 10 includes a first bidirectional communication device 11 and a second bidirectional communication device 12. The first bidirectional communication device 11 is provided at a first communication end 13. The second bidirectional communication device 12 is provided at a second communication end 14. A communication link is formed between the first bidirectional communication device 11 and the second bidirectional communication device 12 to realize contactless bidirectional communication (e.g., bidirectional data transmission) between the first communication end 13 and the second communication end 14.

In some embodiments, both the first bidirectional communication device 11 and the second bidirectional communication device 12 are configured to synchronously receive and transmit a signal (e.g., an optical signal) to enable contactless synchronized bidirectional communication between the first communication end 13 and the second communication end 14. The first bidirectional communication device 11 may be configured to transmit a first signal, and the second bidirectional communication device 12 may be configured to transmit a second signal. The first bidirectional communication device 11 may also be configured to synchronously receive the second signal sent by the second bidirectional communication device 12, and the second bidirectional communication device 12 may also be configured to synchronously receive the first signal sent by the first bidirectional communication device 11.

Specifically, the bidirectional communication system 10 may be configured for communication between a system master and a system slave in a device or system with bidirectional communication needs in any application scenario, and the first bidirectional communication device 11 may be provided at a system slave (e.g., the first communication end 13) of the bidirectional communication system. The second bidirectional communication device 12 is provided at a system master (e.g., the second communication end 14) of the bidirectional communication system. Thereby, the system master and the system slave of the bidirectional communication system may realize contactless bidirectional communication between the system master and the system slave of the bidirectional communication system through a communication link formed between the first bidirectional communication device 11 and the second bidirectional communication device 12.

In some embodiments, the bidirectional communication system 10 provided by embodiments of the present disclosure is applied in the field of imaging detection. For example, image data acquired by an imaging detection end is transmitted to a control end through the bidirectional communication system to perform imaging based on the acquired image data, and a control signal is transmitted from the control end to the imaging detection end through the bidirectional communication system to control the imaging detection end.

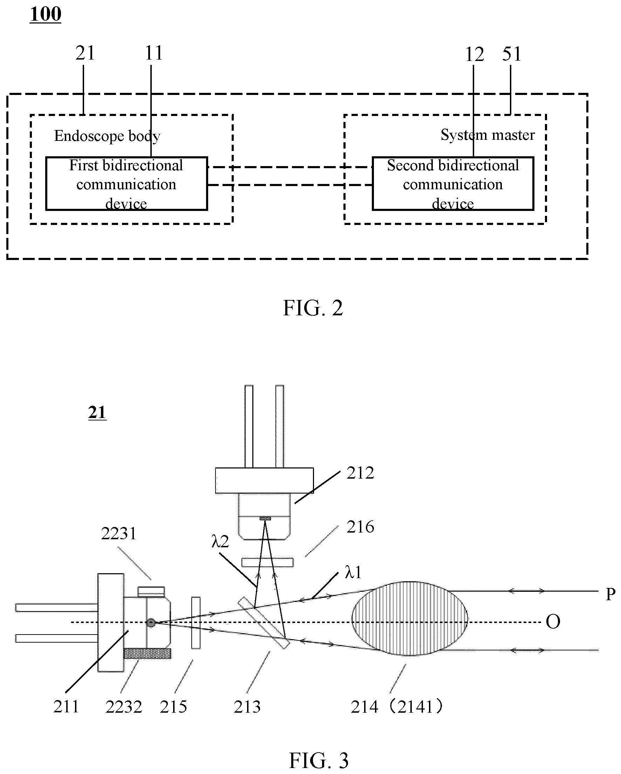

FIG. 2 is a schematic diagram illustrating modules of a bidirectional communication system according to some embodiments of the present disclosure applied to an endoscope system. As shown in conjunction with FIG. 1 and FIG. 2, the bidirectional communication system 10 may be configured for communication (e.g., data transfer) between a system master 51 of an endoscope system 100 and an endoscope body 21. In some embodiments, the endoscope system 100 includes the endoscope body 21 and the system master 51. The endoscope body 21 is typically required to probe deep into a patient's body to illuminate, capture image data, and transmit the image data to the system master 51. The system master 51 performs data analysis on the image data, generates an image, and displays the image.

In some technical solutions, communication between an endoscope body and a system master of an endoscope system is usually realized through an electrical connection. For example, a metal contact is provided at one end of the endoscope body and one end of the system master, so that when the metal contact of the endoscope body and the system master contact with each other, data transmission can be realized, thereby realizing communication between the system master and the endoscope body. However, the communication method of realizing data transmission through contact between metal contacts requires high waterproof performance and corrosion resistance. In addition, since at least a portion of the endoscope body needs to penetrate deep into the patient's body, to avoid mutual contamination between the endoscope body and the patient's body tissues, the endoscope body needs to be cleaned and sterilized before and after use. The resulting problem is that over time and under the influence of the working environment, the metal contact between the endoscope body and the system master is susceptible to corrosion and rust, which may ultimately result in the quality of the communication between the endoscope body and the system master being affected, which is not conducive to the long-term use of the endoscope system.

To solve the problem of the metal contact of the endoscope body and the system master being prone to corrosion as well as rust stains, some endoscope systems in some programs use optical communication to realize data communication between the endoscope body and the system master. For example, by connecting the endoscope body to the system master via optical fiber, optical communication is achieved using wired means. However, a transmission distance of wired data transmission is limited by a length of the optical fiber, which can impose a limitation on a distance between the system master and the endoscope body. For example, an operator controls the system master to manipulate the endoscope body from a location farther away from the endoscope body, in which case it is necessary to connect the endoscope body to the system master via a longer optical fiber, which to a certain extent makes the overall structure of the endoscope system complex, and the longer the optical fiber length, the higher the cost.

To solve the limitation of the transmission distance by the wired optical communication, the endoscope system in some programs will use the wireless optical communication manner to realize data communication between the system master and the endoscope body. Wireless optical communication refers to the transmission of optical signals (e.g., light beams carrying data to be transmitted) through free space, such as air. For example, a bidirectional optical subassembly (BOSA) is provided on both the endoscope body and the system master, and the BOSA is capable of converting an electrical signal carrying to-be-transferred data (e.g., image data captured by an image sensor) into an optical signal and transmitting the optical signal, as well as converting the received optical signal into the electrical signal and thereby acquiring corresponding data. Data collected by the endoscope can be transmitted to the BOSA on the system master through the BOSA on the endoscope, and then further transmitted to the system master. A signal from the system master can also be transmitted to the endoscope body through the BOSA. Currently, the optical signal beams transmitted from the BOSA are convergent. When the distance between the system master and the endoscope is relatively large, the optical signal transmitted from the BOSA on the system master cannot be effectively received by the BOSA on the endoscope body, or the optical signal transmitted from the BOSA on the endoscope body cannot be effectively transmitted from the BOSA on the system master. On one hand, this affects the signal transmission quality; on the other hand, it makes it difficult to adjust the relative position and distance between the system master and the endoscope body flexibly.

To conveniently illustrate the compositional structure of the bidirectional communication system 10 as well as the working principle, all of the following are illustrated exemplarily with the bidirectional communication system 10 being the endoscope system 100. In some embodiments, when the bidirectional communication system 10 is the endoscope system 100, the first bidirectional communication device 11 of the bidirectional communication system 10 may be the endoscope body 21 of the endoscope system 100 or the first bidirectional communication device 11 may be a component disposed on the endoscope body 21 for realizing bidirectional communication function (e.g., the first communication end 13 is the endoscope body 21 of the endoscope system 100). The second bidirectional communication device 12 of the bidirectional communication system 10 may be the system master 51 of the endoscope system 100 or the second bidirectional communication device 12 may be a component disposed on the system master 51 for realizing bidirectional communication function (e.g., the second communication end 14 is the system master 51 of the endoscope system 100). As a result, contactless bidirectional communication can be realized between the system master 51 and the endoscope body 21 of the endoscope system 100, which helps avoid corrosion of communication connection apparatuses (such as metal contacts) between the system master 51 and the endoscope body 21 of the endoscope system 100 during cleaning and disinfection, ensuring product quality. In other embodiments, when the bidirectional communication system 10 is the endoscope system 100, the first bidirectional communication device 11 may also be the system master 51 or the first bidirectional communication device 11 may be a component disposed on the system master 51 for realizing bidirectional communication function, and the second bidirectional communication device 12 may be the endoscope body 21 or the second bidirectional communication device 12 may be a component disposed on the endoscope body 21 for realizing the bidirectional communication function. In other embodiments, the bidirectional communication system 10 may also be applied to devices or systems other than the endoscope system 100 that require bidirectional communication, such as a surgical robot, an underwater robot, a mine exploration robot, or the like.

FIG. 3 is a schematic diagram illustrating an exemplary structure of a first bidirectional communication device disposed in an endoscope according to some embodiments of the present disclosure. In some embodiments, in conjunction with FIG. 1 to FIG. 3, the endoscope system 100 (e.g., the bidirectional communication system 10) includes the endoscope body 21 (e.g., the first communication end 13) and the system master 51 (e.g., the second communication end 14), with contactless bidirectional communication between the endoscope body 21 and the system master 51 being achieved through the first bidirectional communication device 11 and the second bidirectional communication device 12. For the convenience of description, the following illustrates a structure of the first bidirectional communication device 11 and a bidirectional communication process between the first bidirectional communication device 11 and the second bidirectional communication device 12 are described in terms that the endoscope body 21 includes the first bidirectional communication device 11 and the system master 51 includes the second bidirectional communication device 12.

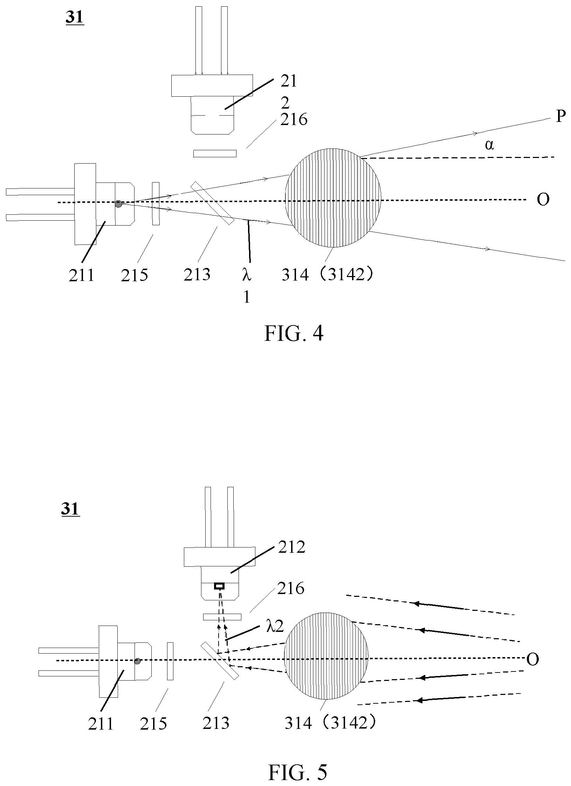

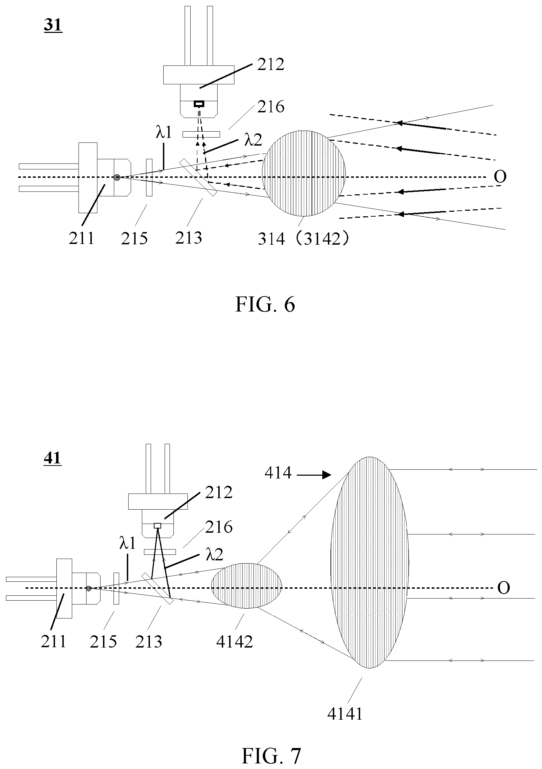

In some embodiments, the endoscope body 21 (e.g., the first bidirectional communication device 11) includes a first signal transmitter 211, a first signal receiver 212, a first beam splitter 213, and a first optical lens 214. The first signal transmitter 211 is configured to transmit a first optical signal. The first signal receiver 212 is configured to receive a second optical signal transmitted from the system master 51. The first beam splitter 213 is configured to transmit at least a portion of the first optical signal and reflect at least a portion of the second optical signal. The first optical lens 214 is located between the first beam splitter 213 and the system master 51 and includes a collimating lens and/or a diverging lens. The first optical lens 214 refers to an optical lens group that, after the first optical signal passes through the first beam splitter 213, constrains a beam type of the first optical signal transmitted from the first beam splitter 213, such that a final beam type transmitted from the endoscope body 21 is either a parallel beam or a diverging beam. The optical lens group includes one or more optical lenses. The collimating lens refers to an optical lens in which a beam transmitted from an emission end is a parallel beam. For example, the first optical lens 214 may be a collimating lens (e.g., a first collimating lens 2141 shown in FIG. 3), and a beam transmitted from the first collimating lens 2141 is a parallel beam. The diverging lens refers to an optical lens in which a beam transmitted from the emission end is a diverged beam. For example, the first optical lens 214 may be a diverging lens (e.g., a first diverging lens 3142 shown in FIG. 4 or FIG. 6), and a beam transmitted from the first diverging lens 3142 is a diverged beam. The parallel beam refers to a beam with a divergence angle of 0 degrees. The diverged beam refers to a beam with a divergence angle greater than 0 degrees and less than 90 degrees. The divergence angle is an angle between a center axis of a beam (e.g., a main ray, as indicated by O in FIG. 3 or FIG. 4) and a farthest edge ray along a direction perpendicular to the center axis of the beam (as indicated by P in FIG. 3 or FIG. 4), and is indicated by α in FIG. 4. In some embodiments, a divergence angle of a beam may be in a range of 90 degrees to -90 degrees, and when the divergence angle of the beam is less than 0 degrees and greater than -90 degrees, the beam is a focused beam.

The first signal transmitter 211 may be configured to convert a signal (e.g., an electrical signal) carrying data to be transmitted into an optical signal for transmitting data (e.g., acquired image data), so that data (e.g., the acquired image data) from the endoscope body 21 can be transmitted to the system master 51 via optical communication (e.g., by converting the electrical signal into a first optical signal and sending the first optical signal). In some embodiments, the first signal transmitter 211 includes a semiconductor light-emitting diode or a laser diode (known as an LD laser).

The first signal receiver 212 may be configured to convert a received optical signal into an electrical signal to obtain data corresponding to the electrical signal. For example, the first signal receiver 212 may obtain data (e.g., a control signal) transmitted by the system master 51 after converting the second optical signal to an electrical signal. For example, the second optical signal is received and converted to an electrical signal. In some embodiments, the first signal receiver 212 includes a photodetector, for example, a phototube, a photomultiplier tube, a photoconductive detector, a photovoltaic detector, or the like.

Based on the endoscope body 21 of the endoscope system 100 of the embodiment, during the transmission of data from the endoscope body 21 to the system master 51, the first optical signal transmitted from the first signal transmitter 211 is incident on the first beam splitter 213. The first beam splitter 213 may allow the first optical signal to pass through and cause the first optical signal to be incident on the first optical lens 214. The first optical lens 214 may process the incident first optical signal such that the first optical signal transmitted from the first optical lens 214 is always a diverged beam or a parallel beam. During reception of data transmitted by the system master 51 by the endoscope body 21, the second optical signal passing through the first optical lens 214 may be incident on the first signal receiver 212. Or, the second optical signal may be first incident on the first beam splitter 213, and the first beam splitter 213 may reflect the second optical signal to reflect the second optical signal passing through the first optical lens 214 into the first signal receiver 212 (when the first beam splitter 213 is configured to reflect at least a portion of the second optical signal into the first signal receiver 212).

Since the first optical lens 214 includes a collimating lens and/or a diverging lens, the first optical signal transmitted from the first optical lens is always a parallel beam or a diverged beam, and the parallel beam and the diverged beam have a farther transmission distance in comparison with a focused beam. For example, a maximum distance for data transmission between the system master 51 and the endoscope body 21 is great, so that the effect of the distance between the system master 51 and the endoscope body 21 on the quality of a transmitted signal can be reduced, to facilitate flexible adjustment of the distance between the system master 51 and the endoscope body 21. In addition, since the beam of optical signals in the present disclosure transmits over a great distance, there is no need to additionally set up optical fibers and optical fiber adapters, which not only simplifies the structure of the endoscope system 100 but also reduces the manufacturing cost.

In some embodiments, the endoscope body 21 further includes a first isolator 215. The first isolator 215 is disposed at an emission end of the first signal transmitter 211, and the first isolator 215 is configured to isolate the first signal transmitter 211 from interference from an external signal. In some embodiments, the first isolator 215 is located between the first signal transmitter 211 and the first beam splitter 213. In some embodiments, the first isolator 215 is configured to allow the first optical signal transmitted from the first signal transmitter 211 to pass through, while preventing a reflected light from the first beam splitter 213 and/or a natural light within the endoscope body 21 from passing through. For example, the first isolator 215 is configured to form a unidirectionally guided optical path that both ensures passage of the first optical signal transmitted from the first signal transmitter 211 and isolates interference from the external signal. Isolating the first signal transmitter 211 from interference of the external signal refers to preventing signals from outside the first signal transmitter 211 (e.g., the reflected light from the first beam splitter 213 and/or the natural light) from entering the first signal transmitter 211. For example, the first isolator 215 prevents all signals from outside the first signal transmitter 211 from passing through, preventing the signals from passing through the first isolator 215 and then entering the first signal transmitter 211 via the emission end of the first signal transmitter 211, which could interfere with the emission of the first optical signal by the first signal transmitter 211. In some embodiments, the first isolator 215 may be an isolation sheet.

In some embodiments, the endoscope body 21 further includes a second beam splitter 216. The second beam splitter 216 is disposed at an incident end of the first signal receiver 212, and the second beam splitter 216 is configured to isolate the first signal receiver 212 from interference from external signals. In some embodiments, the second beam splitter 216 is located between the first beam splitter 213 and the first signal receiver 212. The second beam splitter 216 may further isolate the first signal receiver 212 from interference from external signals (e.g., filter optical signals entering the first signal receiver 212 to allow an optical signal of specific wavelengths to pass through and to isolate optical signals (e.g., the first optical signal transmitted from the first signal transmitter 211, or the natural light within the endoscope body 21, etc.) of other wavelengths). If the second beam splitter 216 is not provided, optical signals other than the second optical signal (e.g., the natural light) may also enter the first signal receiver 212 thereby generating an electrical signal. Since this portion of the electrical signal is not an electrical signal required for data transmission, it can interfere with the first signal receiver 212, resulting in a reduced ability of the first signal receiver 212 to receive the optical signal. Further details about the second beam splitter 216 can be found in the description of other embodiments thereof in the present disclosure and will not be repeated here.

In some embodiments, the second beam splitter 216 may be used in combination with the first isolator 215 in other embodiments of the present disclosure. For example, in the embodiment illustrated in FIG. 3, the first isolator 215 is provided between the first signal transmitter 211 and the first beam splitter 213, and the second beam splitter 216 is provided between the first beam splitter 213 and the first signal receiver 212.

In some embodiments, as shown in FIG. 3, the first optical lens 214 includes the first collimating lens 2141. The first collimating lens 2141 is configured to collimate the first optical signal and couple the second optical signal. The term "collimate" refers to converting a beam incident on the first collimating lens 2141 into a parallel beam and transmitting a parallel beam. For example, in the embodiment shown in FIG. 3, a beam of the first optical signal transmitted from the first beam splitter 213 is a diverged beam, and when the diverged beam is incident on the first collimating lens 2141, it is converted by the first collimating lens 2141 into a parallel beam and transmitted. The term "couple" refers to enabling beams of different wavelengths to be transmitted within the same communication link. For example, the first collimating lens 2141 may couple the first optical signal and the second optical signal for transmission within the same communication link, and the first optical signal and the second optical signal may be transmitted simultaneously without affecting each other.

After setting the first collimating lens 2141, the beam of the first optical signal can be collimated by the first collimating lens 2141, so that the beam of the first optical signal transmitting from the first collimating lens 2141 is a parallel beam. Since the long transmission distance of the parallel beam, it is possible to reduce the influence of the distance between the system master 51 and the endoscope body 21 on the quality of a transmitted signal, to facilitate flexible adjustment of the distance between the system master 51 and the endoscope body 21. In addition, since the beam of the optical signals in the present disclosure is transmitted over a long distance, there is no need to additionally set up the optical fibers and the optical fiber adapters, which not only simplifies the structure of the endoscope system 100 but also reduces the manufacturing cost. In other embodiments, coupling the second optical signal by the first collimating lens 2141 enables the transmission signals (e.g., the first optical signal and the second optical signal) between the system master 51 and the endoscope body 21 to be transmitted within the same communication link, reducing a count of required communication links and improving the integration of the endoscope system 100.

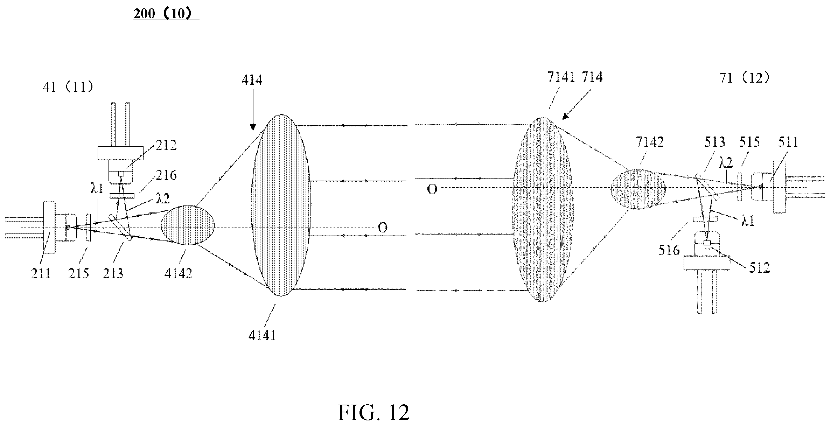

In some embodiments, as shown in FIG. 3, a projection area of the second optical signal on the first collimating lens 2141 along a direction of a center axis of the second optical signal is a first area, a lens area of the first collimating lens 2141 is a second area, and a ratio of the first area to the second area is greater than or equal to a first predetermined ratio. In some practical application scenarios, when a center axis of the beam of the first optical signal transmitted from one end of the endoscope body 21 is spaced apart from the center axis of the beam of the second optical signal transmitted from one end of the system master by a certain distance (as shown in FIG. 12), which corresponds to the center axis of the beam of the second optical signal not coinciding with a center axis of a lens surface of the first collimating lens 2141, which results in a portion of the second optical signal not being incident on the first collimating lens 2141, which in turn results in the projection area (e.g., a first area) of the second optical signal on the first collimating lens 2141 being smaller than the lens area (e.g., a second area) of the first collimating lens 2141. In some embodiments, a portion of the second optical signal not incident on the first collimating lens 2141 may cause a reduction in the reception power (e.g., the strength of the optical signal received by the first signal receiver 212) on one end of the endoscope body 21, and a minimum value of the ratio (e.g., the first predetermined ratio) of the first area to the second area is required to limit the reception power of the one end of the endoscope body 21 to maintain it to satisfy a target requirement. In some embodiments, a value of the first predetermined ratio is greater than 0 and less than 100%. It will be appreciated that when the ratio of the first area to the second area is 0, it indicates that the second optical signal is not received by the lens surface of the first collimating lens 2141. When the ratio of the first area to the second area is 100%, it is indicated that all regions of the lens surface of the first collimating lens 2141 receive the second optical signal.

In some embodiments, the ratio of the first area to the second area is greater than or equal to 10%. In some embodiments, the ratio of the first area to the second area is greater than or equal to 30%. In some embodiments, the ratio of the first area to the second area is greater than or equal to 70%. In some embodiments, the ratio of the first area to the second area is greater than or equal to 90%.

FIG. 4 is a schematic diagram illustrating an exemplary structure of a first bidirectional communication device disposed in an endoscope body according to some other embodiments of the present disclosure. FIG. 5 is a schematic diagram illustrating a first bidirectional communication device, which is disposed in an endoscope body shown in FIG. 4, receiving a second optical signal. FIG. 6 is a schematic diagram illustrating a first bidirectional communication device, which is disposed in an endoscope body shown in FIG. 4, synchronously receiving a second optical signal and transmitting a first optical signal. In some embodiments, a first optical lens 314 includes a first diverging lens 3142, the first diverging lens 3142 is configured to diverge a first optical signal and couple a second optical signal. The term "diverge" refers to turning a beam of the first optical signal transmitted from the first diverging lens 3142 into a diverged beam. As shown in FIG. 4 to FIG. 6, when the beam of the first optical signal is incident on the first diverging lens 3142, beams transmitted from the first diverging lens 3142 are all diverged beams.

The difference between the endoscope body 31 in the present embodiment and the endoscope body 21 in FIG. 3 is that the first optical lens 314 of the endoscope body 31 in the present embodiment includes the first diverging lens 3142, and the beam transmitted from the first diverging lens 3142 is a diverged beam. The first optical lens 214 of the endoscope body 21 in FIG. 3 includes the first collimating lens 2141, and a beam transmitted from the first collimating lens 2141 is a parallel beam. Other than that, other components (e.g., the first signal transmitter 211, the first signal receiver 212, the first beam splitter 213, the first isolator 215, and the second beam splitter 216) of the endoscope body 31 in this embodiment are the same as or similar to the endoscope body 21 shown in FIG. 3, and will not be repeated herein. In this embodiment, the first diverging lens 3142 diverges the first optical signal into a wireless space, such as air, and a divergence angle of the diverged beam may be α, which provides a larger transmitting surface as compared to a parallel beam. Further, the first diverging lens 3142 couples the second optical signal and sends the second optical signal to the first signal receiver 212 (e.g., the first photodetector). By setting the diverging lens separately, the transmitting surface can be enlarged, which can reduce the installation precision while ensuring a certain coupling efficiency.

After setting the first diverging lens 3142, when the endoscope body 21 transmits a signal to a system master, the beam of the first optical signal can be diverged through the first diverging lens 3142, thereby increasing a diameter of the beam of the first optical signal, that is, a maximum distance for data transmission between the system master and the endoscope body 21 is great, which further reduces the influence of the distance between the system master and the endoscope body 21 on the quality of a transmitted signal, to facilitate flexible adjustment of the distance between the system master and the endoscope body 21. In addition, since the diverged beam in the present disclosure transmits over a great distance, there is no need to additionally set up optical fibers and optical fiber adapters, which not only simplifies the structure of the endoscope system 100 but also reduces the manufacturing cost. In addition, since the first optical signal transmitted from the first diverging lens 3142 is the diverged beam with a large divergence angle, even when a center axis of the beam of the first optical signal deviates from a center axis of the beam of the second optical signal, it is still possible to ensure that the reception power at one end of the system master meets a target requirement, thereby reducing the requirement for installation accuracy while ensuring communication efficiency.

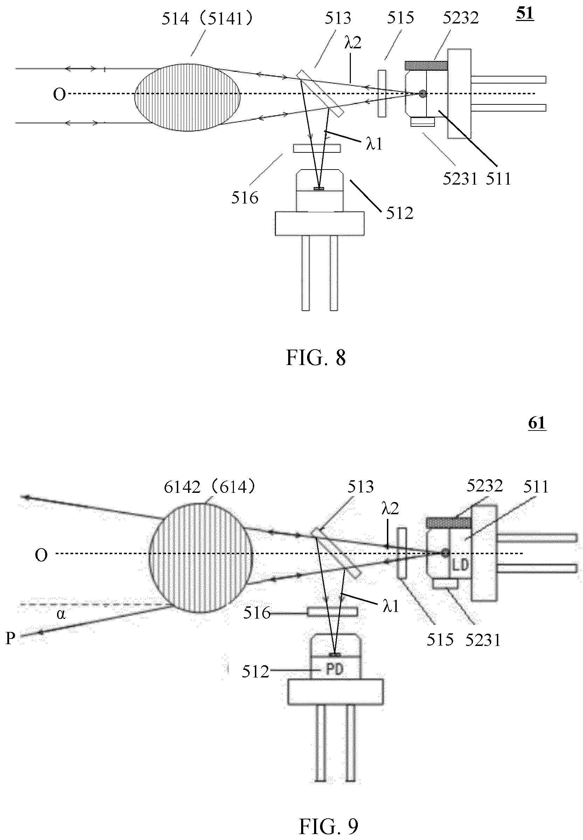

It should be noted that the transmission power in the present disclosure is usually at the milliwatt (mW) level, while the demand for the receiving power is above a few hundred milliwatt (uW) level, so the center axis (e.g., a principal ray) of the beam of the first optical signal may not completely coincide with the center axis of the beam of the second optical signal, as long as the received optical power meets a target requirement. For example, when the center axis of the beam of the first optical signal is spaced apart from the center axis of the beam of the second optical signal by a certain distance, it is still possible to ensure that the reception power meets the requirements because the diverged beam is readily received by a signal receiving component of the system master (e.g., a second optical lens 514 shown in FIG. 8).

In some embodiments, the embodiment of FIG. 3 and the embodiment of FIG. 4 may be combined. For example, the first optical lens includes a first collimating lens and a first diverging lens, and the first collimating lens and the first diverging lens together change a path of the first optical signal, and couple the second optical signal.

In some embodiments, the first optical lens includes a first collimating lens and a first diverging lens. The first collimating lens is arranged between the first beam splitter and the first diverging lens. The first collimating lens is configured to collimate the first optical signal, and transmit the collimated first optical signal to be incident on the first diverging lens. The first diverging lens is configured to diverge the first optical signal transmitted from the first collimating lens.

FIG. 7 is a schematic diagram illustrating an exemplary structure of a first bidirectional communication device disposed in an endoscope body according to some other embodiments of the present disclosure. FIG. 7 exemplarily shows a schematic diagram of another structure of an endoscope body 41. In some embodiments, as illustrated in FIG. 7, the first optical lens 414 includes a first collimating lens 4141 and a first diverging lens 4142. The first diverging lens 4142 is configured to diverge a first optical signal, and transmit the diverged first optical signal is incident on the first collimating lens 4141, and the first collimating lens 4141 is configured to collimate the first optical signal. The first collimating lens 4141 and the first diverging lens 4142 are further configured to couple a second optical signal. The difference between the endoscope body 41 in the present embodiment and the endoscope body 21 in FIG. 3 in that, based on the fact that the first optical lens 214 of the endoscope body 21 in FIG. 3 includes the first collimating lens 2141, the first optical lens 414 of the endoscope body 41 in this embodiment includes both the first collimating lens 4141 and the first diverging lens 4142, and the first optical signal transmitted from the first beam splitter 213 will first be incident on the first diverging lens 4142, and then be incident on the first collimating lens 4141 from the first diverging lens 4142, and finally transmitted from the first collimating lens 4141. Other than that, other components of the endoscope body 41 in this embodiment (e.g., the first signal transmitter 211, the first signal receiver 212, the first beam splitter 213, the first isolator 215, and the second beam splitter 216) are the same as or similar to the endoscope body 21 of FIG. 3, and will not be repeated herein.

In this embodiment, in the process of transmitting a signal from the endoscope body 21 to a system master, a first optical signal transmitted from the first signal transmitter 211 is first incident on the first diverging lens 4142 after passing through the first beam splitter 213, and the first optical signal is diverged by the first diverging lens 4142 and then incident on the first collimating lens 4141, and then the first optical signal is converted into a parallel beam by the first collimating lens 4141 and transmitted. In the process of transmitting a signal from the system master to the endoscope body 21, a second optical signal transmitted from the system master is sequentially incident on the first beam splitter 213 after passing through the first collimating lens 4141 and the first diverging lens 4142, then is reflected by the first beam splitter 213 to the second beam splitter 216, and finally passes through the second beam splitter 216 and is incident on the first signal receiver 212. In addition, the first collimating lens 4141 and the first diverging lens 4142 may couple the second optical signal to enable the first optical signal and the second optical signal to be transmitted within the same communication link.

In some embodiments, since the first optical lens 414 includes the first diverging lens 4142, the first optical signal transmitted from the first signal transmitter 211 is diverged from the first diverging lens 4142, thereby increasing a divergence angle of the first optical signal. Further, since the first optical lens 414 also includes the first collimating lens 4141, a diverged beam transmitted from the first diverging lens 4142 may be collimated by the first collimating lens 4141. Through the cooperation of the first diverging lens 4142 and the first collimating lens 4141, it is possible to solve the problem of the restriction of an emission angle of the first signal transmitter 211 (e.g., a first laser diode laser). For example, the first optical signal transmitted from the first signal transmitter 211 is converted into a parallel beam with a large diameter. Even when a center axis of a beam of the first optical signal (e.g., a main ray) deviates from a center axis of a beam of the second optical signal, data transmission can still maintain the target reception power, thereby reducing the requirement for installation accuracy while maintaining communication efficiency.

In some embodiments, a first optical lens (e.g., the first optical lens 214, the first optical lens 314, the first optical lens 414) includes a first focusing lens, and the first focusing lens may be combined with a first collimating lens (e.g., the first collimating lens 2141, the first collimating lens 4141) and/or a first diverging lens (e.g., the first diverging lens 3142, the first diverging lens 4142), such that a beam transmitted from the first optical lens is a diverged beam or a parallel beam, as will not be further described.

In some embodiments, a cross-sectional dimension of the beam of the first optical signal at an emission end surface of the first optical lens (e.g., the first optical lens 214, the first optical lens 314, the first optical lens 414) is a first cross-sectional dimension, and a cross-sectional dimension of the beam of the first optical signal at an incident end surface of the first optical lens is a second cross-sectional dimension. The first cross-sectional dimension is greater than the second, which is equivalent to that the first optical lens increases a maximum distance between the system master 51 and the endoscope body 21 for data transmission, further reducing the effect of the distance between the system master 51 and the endoscope body 21 on the quality of a transmitted signal. For example, as shown in FIG. 3, a cross-sectional dimension of the beam of the first optical signal at an emission end surface of the first collimating lens 2141 is greater than a cross-sectional dimension of the beam of the first optical signal at an incident end surface of the first collimating lens 2141. As another example, as shown in FIG. 4, a cross-sectional dimension of the beam of the first optical signal at an emission end surface of the first diverging lens 3142 is greater than a cross-sectional dimension of the beam of the first optical signal at an incident end surface of the first diverging lens 3142. As another example, as shown in FIG. 7, when the first diverging lens 4142 is arranged between the first collimating lens 4141 and the first beam splitter 213, the cross-sectional dimension of the beam of the first optical signal at the emission end surface of the first collimating lens 4141 is greater than the cross-sectional dimension of the beam of the first optical signal at the incident end surface of the first diverging lens 4142. As another example, based on the embodiment shown in FIG. 7, the first collimating lens 4141 is disposed between the first diverging lens 4142 and the first beam splitter 213, and the cross-sectional dimension of the beam of the first optical signal at the emission end surface of the first diverging lens 4142 is greater than the cross-sectional dimension of the beam of the first optical signal at the incident end surface of the first collimating lens 4141. In other embodiments, the first cross-sectional dimension may be less than or equal to the second cross-sectional dimension.

In some embodiments, a divergence angle of a beam of the first optical signal transmitted from the first optical lens (e.g., the first optical lens 414) is a first divergence angle, and a divergence angle of a beam of the first optical signal incident on the first optical lens is a second divergence angle. The first divergence angle is greater than the second divergence angle. Since the first divergence angle is greater than the second divergence angle, it is equivalent to the first optical lens diverging the first optical signal, increasing a divergence angle of the first optical signal and improving the transmission distance of the first optical signal. For example, as shown in FIG. 4, a beam transmitted from the first diverging lens 3142 is a diverged beam, and a beam incident on the first diverging lens 3142 is also a diverged beam but the first divergence angle is greater than the second divergence angle. As another example, based on the embodiment shown in FIG. 7, the first collimating lens 4141 is disposed between the first diverging lens 4142 and the first beam splitter 213, and the divergence angle of the first optical signal transmitted from the first diverging lens 4142 is greater than the divergence angle of the first optical signal incident on the first collimating lens 4141.

In other embodiments, the first divergence angle may be less than or equal to the second divergence angle. For example, the first optical signal incident on the first collimating lens 2141 is a diverged beam, and the first optical signal transmitted from the first collimating lens 2141 is a parallel beam, and thus the first divergence angle is less than the second divergence angle.

In some embodiments, the first optical lens (e.g., the first optical lens 214, the first optical lens 314, and the first optical lens 414) includes one or more first collimating lenses 2141 and/or one or more first diverging lenses 3142.

For example only, as shown in FIG. 3, when the first optical lens includes the first collimating lens 2141, a count of the first collimating lens 2141 may be one or more. For example, as shown in FIG. 3, the first optical lens 214 includes one first collimating lens 2141. As another example, the first optical lens 214 includes a plurality of first collimating lenses 2141.

As another example, as shown in FIG. 4, when the first optical lens 314 includes the first diverging lens 3142, a count of the first diverging lens 3142 may be one or more. For example, as shown in FIG. 4, the first optical lens 314 includes one first diverging lens 3142. As another example, the first optical lens 314 includes a plurality of first diverging lenses 3142.

As another example, as shown in FIG. 7, when the first optical lens 414 includes the first diverging lens 4142 and the first collimating lens 4141, a count of the first collimating lens 4141 and the first diverging lens 4142 may be one or more. For example, the count of the first collimating lens 4141 and the first diverging lens 4142 is one, as shown in FIG. 7. As another example, the first diverging lens 4142 may be two, and the first collimating lens 4141 may be one. One of the first diverging lenses 4142 is configured to diverge a first optical signal transmitted from the first beam splitter 213 and transmit the first optical signal to another first diverging lens 4142, the first collimating lens 4141 is configured to collimate the first optical signal transmitted from another first diverging lens 4142 and transmit the first optical signal.

In some embodiments, when the first optical lens (e.g., the first optical lens 214, the first optical lens 314, the first optical lens 414) includes a plurality of first diverging lenses and/or first collimating lenses, the beam of the first optical signal may have a same cross-sectional dimensions at an emission end surface of each of the plurality of first diverging lenses and the plurality of first collimating lenses. In some embodiments, the beam of the first optical signal may have different cross-sectional dimensions at an emission end surface of the first diverging lens and the first collimating lens.

In some embodiments, when the first optical lens (e.g., the first optical lens 314, the first optical lens 414) includes a plurality of first diverging lenses, and divergence angles of the first optical signal transmitted from each of the plurality of first diverging lens may be the same. In some embodiments, the divergence angles of the first optical signal transmitted from each of the plurality of first diverging lenses may be different.

In some embodiments, as shown in FIG. 7, along a direction of a center axis of the second optical signal, a projection area of the second optical signal on the first collimating lens 4141 is a first area, a lens area of the first collimating lens 4141 is a second area, and a ratio of the first area to the second area is greater than or equal to a first predetermined ratio. In some practical application scenarios, when a center axis of the beam of the first optical signal transmitted from one end of the endoscope body 41 is spaced apart from a center axis of the beam of the second optical signal transmitted from one end of the system master by a certain distance (as shown in FIG. 12), it is equivalent that the center axis of the beam of the second optical signal does not coincide with a center axis of a lens surface of the first collimating lens 4141, which may result in a portion of the second optical signal not being incident on the first collimating lens 4141, which in turn results in the projection area (e.g., the first area) of the second optical signal on the first collimating lens 4141 being smaller than the lens area (e.g., the second area) of the first collimating lens 4141. In some embodiments, a portion of the second optical signal not incident on the first collimating lens 4141 may cause a reduction in the reception power (e.g., the strength of an optical signal received by the first signal receiver 212) at the endoscope body 41. To maintain the reception power at the endoscope body 41 within a target requirement, it is necessary to impose a limitation on a minimum value of a ratio of the first area to the second area.

In some embodiments, the ratio of the first area to the second area is greater than or equal to 10%. In some embodiments, the ratio of the first area to the second area is greater than or equal to 30%. In some embodiments, the ratio of the first area to the second area is greater than or equal to 70%. In some embodiments, the ratio of the first area to the second area is greater than or equal to 90%.

In some practical application scenarios, the minimum value of the ratio of the first area to the second area is related to the optical signal reception capability at various positions of the lens surface of the first collimating lens 4141, as well as the requirements for the reception power. For example only, if the optical signal reception ability at various positions of the lens surface of the first collimating lens 4141 is uniform, when the requirement of the reception power is 50% of the transmission power, the ratio of the first area to the second area may be equal to 50%. As another example, if the optical signal reception ability at various positions of the lens surface of the first collimating lens 4141 is different, when the requirement for the reception power is 50%, the ratio of the first area to the second area is determined based on the optical signal reception ability at various positions of the lens surface of the first collimating lens 4141.

In some embodiments, as shown in FIG. 7, when the first optical lens 414 includes the first diverging lens 4142 and the first collimating lens 4141, and the first diverging lens 4142 is disposed between the first collimating lens 4141 and the first beam splitter 413, a lens area of the first collimating lens 4141 may be greater than a lens area of the first diverging lens 4142 so that a first optical signal diverged by the first diverging lens 4142 can be received by the first collimating lens 4141 as much as possible, thereby reducing a loss of the first optical signal in the transmission process. Additionally, because the lens area of the first collimating lens 4141 is larger, a diameter of a parallel beam transmitted from the first collimating lens 4141 is larger, which can further reduce the requirement for communication efficiency while ensuring communication efficiency. A lens area of a lens refers to an incident optical surface area or an emission optical surface area of the first collimating lens 4141.

In some embodiments, when the first optical lens 414 includes the first diverging lens 4142 and the first collimating lens 4141, and the first collimating lens 4141 is disposed between the first diverging lens 4142 and the first beam splitter 213, the lens area of the first diverging lens 4142 may be greater than the lens area of the first collimating lens 4141, so that the first optical signal after being collimated by the first collimating lens 4141 can be received by the first diverging lens 4142 as much as possible.

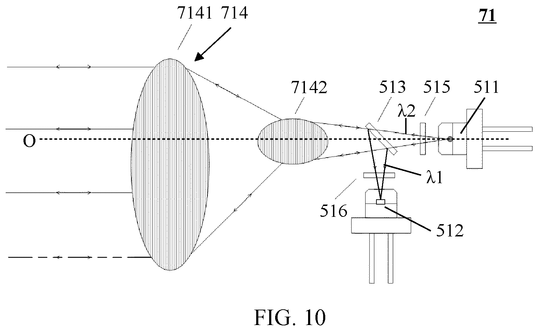

In some embodiments, the divergence angle of the first optical signal transmitted from the first optical lens (e.g., the first optical lens 214, the first optical lens 314, and the first optical lens 414) is the same as a divergence angle of a second optical signal transmitted from a second optical lens (e.g., a second optical lens 514 in FIG. 8, a second optical lens 614 in FIG. 9, and a second optical lens 714 in FIG. 10), thereby further improving the stability of the bidirectional signal transmission, which in turn results in a high quality of the data signal received by the system master 51 and the endoscope body 21. For example, both the first optical lens 214 and the second optical lens 514 transmit parallel beams. As another example, the first optical lens 314 and the second optical lens 614 both transmit diverged beams with the same divergence angle.

In some embodiments, both the first optical signal and the second optical signal include at least one wavelength, and the first optical signal and the second optical signal do not include the identical wavelength to enable the first signal receiver 212 and a second signal receiver (e.g., the second signal receiver 512 in FIG. 8) to generate different electrical signals upon receiving the first optical signal and the second optical signal, respectively. Additionally, since wavelengths of the first optical signal and wavelengths of the second optical signal are not identical, the first beam splitter 213 can be enabled to decompose optical signals with different wavelengths, thereby transmitting the first optical signal and reflecting the second optical signal. This enables the endoscope body 21 to transmit a signal to the system master as well as receive a signal transmitted by the system master, thereby realizing bidirectional signal transmission between the endoscope body 21 and the system master. As an example, the first optical signal and the second optical signal may both include a plurality of wavelengths, and the first optical signal and the second optical signal include at least one different wavelength. For example, some wavelengths contained in the first optical signal and the second optical signal are identical, while others are different. As another example, some wavelengths contained in the first optical signal and the second optical signal are completely different (e.g., the first optical signal and the second optical signal do not have the identical wavelength). As another example, the first optical signal and the second optical signal both include one wavelength, and wavelengths contained in the first optical signal and the second optical signal are different.

For ease of description, in some embodiments in the present disclosure, both the first optical signal and the second optical signal contain one wavelength. For example, as illustrated in FIG. 3, the wavelength of the first optical signal may be λ1 and the wavelength of the second optical signal may be λ2, with λ1 being different from λ2. It is noted that in some embodiments, the first optical signal and the second optical signal may not be limited to including only one wavelength. For example, the first optical signal and the second optical signal may include a plurality of wavelengths, but not shown in accompanying drawings.

It should be noted that the embodiments of the present disclosure are intended only to illustrate that the wavelengths of the first optical signal and the second optical signal are different, and do not limit the relative magnitude of the wavelengths between the first optical signal and the second optical signal. For example, the wavelength of the first optical signal may be greater than the wavelength of the second optical signal. As another example, the wavelength of the first optical signal may be less than the wavelength of the second optical signal.

In some embodiments, the above purpose can be achieved by providing a component in the optical path that changes a wavelength composition of the optical signal, so that the first signal receiver 212 and a second signal receiver, after receiving the first optical signal and the second optical signal, respectively, can generate different electrical signals.

In some embodiments, the endoscope body 21 further includes a first filter (not shown in the figures). The first filter is provided at an emission end of the first signal transmitter 211, and the first filter is configured such that the first optical signal and the second optical signal include at least one different wavelength. In this embodiment, the first filter may filter the first optical signal transmitted from the first signal transmitter 211 such that at least a portion of a wavelength in the first optical signal that is identical as that of the second optical signal is filtered out, such that the first optical signal and the second optical signal include at least one different wavelength.

In some embodiments, the first filter may be used in conjunction with the first isolator in embodiments of the present disclosure. For example, the first filter is arranged between the first isolator 215 and the first signal transmitter 211. As another example, the first isolator 215 may be arranged between the first filter and the first signal transmitter 211. In some embodiments, the first filter may be the same as or similar to the first isolator 215 in other embodiments of the present disclosure. For example, the first isolator 215 may both isolate the first signal transmitter 211 from outside beams and also filter the first optical signal.

In some embodiments, the endoscope body 21 further includes a second filter. The second filter is disposed at an incident end of the first signal receiver 212, and the second filter is configured such that the second optical signal and the first optical signal include at least one different wavelength. In this embodiment, the second filter may filter the second optical signal such that at least a portion of a wavelength in the second optical signal that is identical as that of the first optical signal is filtered out, such that the second optical signal and the first optical signal include at least one different wavelength.

In some embodiments, the first filter may be used in conjunction with the second filter. For example, the first filter filters the first optical signal transmitted from the first signal transmitter 211, and the second filter filters the second optical signal transmitted to the first signal receiver 212. In some embodiments, the first filter may be used in combination with the second beam splitter in embodiments of the present disclosure. For example, the second filter may be arranged between the second beam splitter and the first signal receiver 212. As another example, the second beam splitter may be arranged between the second filter and the first signal receiver 212.

In some embodiments, a different electrical signal can be generated by varying a sensitive range of the first signal receiver 212 such that the first signal receiver 212 and the second signal receiver can generate different electrical signals after receiving the first optical signal and the second optical signal, respectively.

In some embodiments, the sensitive range of the first signal receiver 212 and a sensitive range of the second signal receiver are completely independent and not fully overlapping. The term "independent" means that the sensitive range of the first signal receiver and the sensitive range of the second signal receiver do not affect each other. The term "not fully overlapping" means the two sensitive range are at least partially different. For example only, both the first optical signal and the second optical signal include a plurality of wavelengths, and the sensitive range of the first signal receiver 212 is at least partially different from the sensitive range of the second signal receiver, so that wavelengths that the first signal receiver 212 can detect and wavelengths that the second signal receiver can detect are at least partially different, so that different electrical signals can be generated. As another example, the first optical signal and the second optical signal both include a plurality of wavelengths, and the sensitive range of the first signal receiver 212 and the sensitive range of the second signal receiver do not overlap at all. For example, the sensitive range of the first signal receiver 212 and the sensitive range of the second signal receiver do not have the same portion. As another example, both the first optical signal and the second optical signal include one different wavelength, and the sensitive range of the first signal receiver 212 and the sensitive range of the second signal receiver do not overlap at all.

In some embodiments, both the first optical signal and the second optical signal include a plurality of identical wavelengths, and the sensitive range of the first signal receiver 212 and the sensitive range of the second signal receiver are completely independent and do not overlap. For example, both the first optical signal and the second optical signal include four identical wavelengths, and the sensitive range of the first signal receiver 212 includes two of the wavelengths, and the sensitive range of the second signal receiver includes another two wavelengths.

In some embodiments, it is possible to combine each of the foregoing embodiments, e.g., by setting the first filter and/or the second filter while making the sensitive range of the first signal receiver 212 and the sensitive range of the second signal receiver completely independent and not completely overlap.

In some embodiments, the first beam splitter 213 is further configured to reflect at least a portion of the second optical signal to the first signal receiver. In some embodiments, since the first beam splitter 213 can both allow the first optical signal transmitted from the first signal transmitter 211 to pass through and thus be incident on the first optical lens, and also reflect the second optical signal passing through the first optical lens to the first signal receiver 212. Thus, the first beam splitter 213 can, on the one hand, prevent the incident second optical signal from interfering with the first signal transmitter 211, and on the other hand, can enable bidirectional signal transmission between the system master 51 and the endoscope body 21 to be within the same communication link, thereby reducing a count of required communication links and improving the integration of the endoscope system 100.

In some embodiments, the first beam splitter 213 may be configured to fully transmit the first optical signal as well as to reflect a portion of the second optical signal to the first signal receiver 212, as shown in FIG. 3. For example, the first beam splitter 213 may fully transmit the first optical signal as well as reflect 50% of the second optical signal to the first signal receiver 212. In some embodiments, the first beam splitter 213 may be configured to transmit a portion of the first optical signal and fully reflect the second optical signal to the first signal receiver 212. For example, the first beam splitter 213 may allow transmission of 50% of the first optical signal. In some embodiments, the first beam splitter 213 is configured to fully transmit the first optical signal as well as to fully reflect the second optical signal to the first signal receiver 212, thereby increasing the transmission power of the first optical signal, and increasing the reception power of the second optical signal.

In some embodiments, an axis of the first signal transmitter 211 is perpendicular to an axis of the first signal receiver 212. The axis of the first signal transmitter 211 is a center axis of an emission port of the first signal transmitter 211. The axis of the first signal receiver 212 is a center axis of a reception port of the first signal receiver 212. In some embodiments, an angle between the first beam splitter 213 and a center axis of the first signal transmitter 211 is in a range of 30 degrees and 60 degrees. For example, the angle between the first beam splitter 213 and the center axis of the first signal transmitter 211 is 45 degrees, and since the axis of the first signal transmitter 211 is perpendicular to the axis of the first signal receiver 212, the angle between the first beam splitter 213 and the center axis of the first signal receiver 212 is 45 degrees. The angle between the first beam splitter 213 and the center axis of the first signal transmitter 211 refers to an angle between an incident optical surface of the first beam splitter 213 and the center axis of the first signal transmitter 211. In some embodiments, the first beam splitter 213 is a beam splitter. The beam splitter is configured to break down optical signals of different wavelengths, thereby resulting in total transmission of the first optical signal and total reflection of the second optical signal. As an example only, as shown in FIG. 3, since the axis of the first signal transmitter 211 is perpendicular to the axis of the first signal receiver 212, an angle between a surface of the beam splitter and the axis of the first signal transmitter 211 and the axis of the first signal receiver 212 is 45 degrees. A beam with a wavelength of λ1 (e.g., the first optical signal) is decomposed by the beam splitter after incident on the beam splitter, which is in turn incident on the first optical lens 213 after passing through the beam splitter. A beam with a wavelength of λ2 (e.g., the second optical signal) is decomposed by the beam splitter after incident on the beam splitter, which is in turn reflected by the beam splitter to the second beam splitter 216.

In some embodiments, the angle between an incident optical surface of the second beam splitter 216 and the axis of the first signal transmitter 211 is in a range of 0 degrees to 5 degrees. For example, the angle between the incident optical surface of the second beam splitter 216 and the axis of the first signal transmitter 211 is 0 degrees. In some embodiments, the second beam splitter 216 may be a beam splitter. By way of example only, the beam with a wavelength of λ2 (e.g., the second optical signal) that is incident on the second beam splitter 216 (e.g., a beam splitter having an angle of 0 degrees between the incident optical surface and the axis of the first signal transmitter 211) is decomposed by the beam splitter, and in turn passes through the beam splitter and is incident on the first signal receiver 212. While beams with other wavelengths of light cannot pass through the beam splitter, and thus beams with other wavelengths may be blocked from entering the first signal receiver 212.

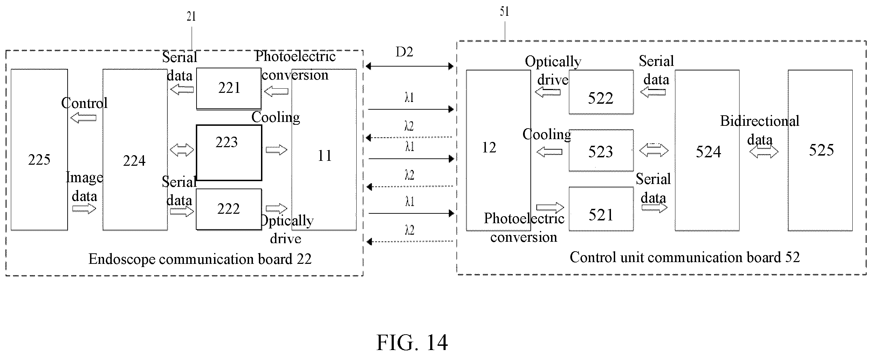

In some embodiments, the first optical signal includes a status signal, a feedback signal, an image signal, etc. The status signal is a signal that reflects an operation state of the endoscope body 21. For example, the operation status of the endoscope body 21 includes an operation time of the endoscope body 21, a remaining power of the endoscope, or the like. The feedback signal is a signal that is fed back to the system master after the endoscope body 21 receives a control signal and performs a corresponding action. In some embodiments, the second optical signal includes the control signal. The control signal refers to a signal for controlling the endoscope body 21 (e.g., an image sensor 225 of the endoscope body 21 in FIG. 14) to perform a specific action (e.g., steering, focusing, etc.).

In some embodiments, the first optical signal and the second optical signal may include a high-speed signal and/or a low-speed signal. The high-speed signal is an optical signal that is transmitted at a speed greater than a predetermined speed range. The low-speed signal is an optical signal that is transmitted at a speed lower than the predetermined speed range. In some embodiments, the predetermined speed range may be in a range of 0.5Gps to 10Gps. In some embodiments, the predetermined speed range may be in a range of 1Gps to 5Gps. In some embodiments, the predetermined speed range may be 1 Gps. For example, an optical signal that is transmitted at a speed greater than 1 Gps is a high-speed signal, and an optical signal that is transmitted at a speed less than 1 Gps is a low-speed signal. For example, the first optical signal is a status signal and the second optical signal is a control signal, both the first optical signal and the second optical signal are low-speed signals. As another example, the first optical signal is a feedback signal and the second optical signal is a control signal, the feedback signal is a high-speed signal and the control signal is a low-speed signal. As another example, the first optical signal includes a feedback signal and a status signal. The feedback signal is a high-speed signal and the status signal is a low-speed signal.

In some embodiments, on a system master communication board (e.g., a system master communication board 52 in FIG. 14), a low-speed signal obtained by a second FPGA chip (e.g., a second FPGA chip 524 in FIG. 14) via an external interface (e.g., an external interface 525 in FIG. 14) may be a control signal used to control an operation of a system slave. Additionally, the low-speed signal may include a status signal (e.g., a status signal is transmitted as a low-speed signal) and a feedback signal (e.g., a feedback signal is transmitted as a low-speed signal), which refer to an operational status signal actively sent by the system slave to the system master 51, and an action feedback signal from the system slave after receiving the control signal to perform an operation. The high-speed signal may include a high-speed image signal that is feedback from the system slave (e.g., an image signal is transmitted as a high-speed signal), and the system slave can synchronously send signals in the form of a high-speed image signal and a feedback signal/status signal.

It should be noted that when the first optical signal and the second optical signal include both a high-speed signal and a low-speed signal, the high-speed signal and the low-speed signal may be combined into a variety of logic types of signals. For example, the first optical signal includes a high-speed image signal and a feedback signal, or the first optical signal includes a logic type of a high-speed image signal and a status signal. Considering the real-time nature of the image transmission and the high-speed communication characteristics of the bidirectional communication device, the specific embodiment may be as follows: within a certain time, such as within 1 ms, the system slave (e.g., the endoscope body 21 of the endoscope system 100) transmit high-speed image signals during the first 800us, and during the following 200us, transmit low-speed signals (e.g., feedback signals and/or status signals). In the next 1 ms, high-speed image signals continue to be sent in the first 800us, followed by low-speed signals (e.g., feedback signals and/or status signals), in the last 200us. This cycle continues. Both the real-time transmission of the image over a certain period and the transmission of the low-speed signal are guaranteed. Thus, it is possible to send a plurality of logical types of signals through a single communication link through time division multiplexing. Similarly, a system master (e.g., the system master 51 of the endoscope system 100) may send high-speed signals and/or low-speed signals, which will not be repeated here to avoid repetition.

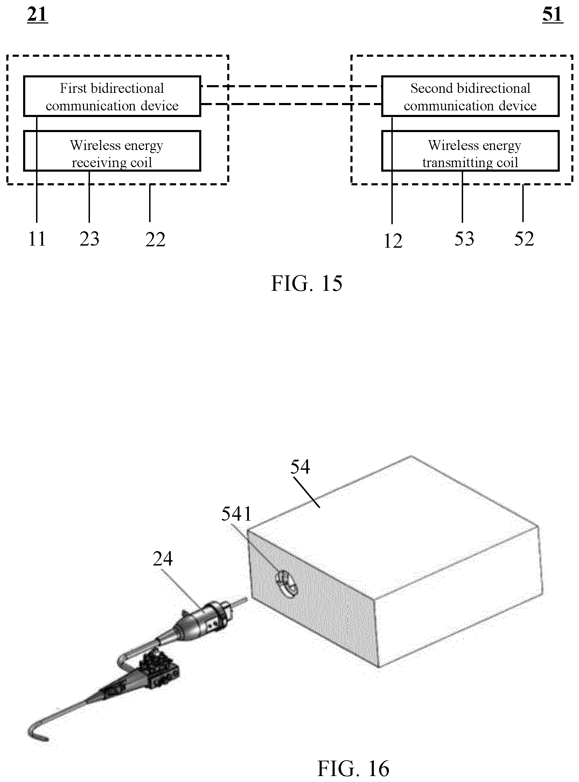

In some embodiments, a first bidirectional communication device (e.g., the first bidirectional communication device 11 in FIG. 2) includes a wireless energy receiving coil (e.g., a wireless energy receiving coil 23 in FIG. 15), a second bidirectional communication device (e.g., the second bidirectional communication device 12 in FIG. 2) includes a wireless energy transmitting coil (e.g., a wireless energy transmitting coil 53 in FIG. 15), and the wireless energy transmitting coil is provided in correspondence with the wireless energy receiving coil to enable contactless energy transfer from the second bidirectional communication device to the first bidirectional communication device. For example, the wireless energy receiving coil is arranged in the endoscope body 21 and the wireless energy transmitting coil is disposed in the system master 51, thereby realizing contactless energy transmission from the system master 51 to the endoscope body 21. In other embodiments, the first bidirectional communication device includes a wireless energy transmitting coil, and the second bidirectional communication device includes a wireless energy receiving coil. The wireless energy transmitting coil is disposed in correspondence to the wireless energy receiving coil to realize contactless energy transfer from the first bidirectional communication device to the second bidirectional communication device. For example, the wireless energy receiving coil is disposed in the system master 51, and the wireless energy transmitting coil is disposed in the endoscope body 21, so as to realize contactless energy transmission from the endoscope body 21 to the system master 51. Further details on the wireless energy transmitting coil and the wireless energy receiving coil can be found in the description of FIG. 15 and related embodiments thereof.

FIG. 8 is a schematic diagram illustrating an exemplary structure of a second bidirectional communication device disposed at a system master according to some embodiments of the present disclosure. In some embodiments, as shown in FIG. 8, the system master 51 (e.g., the second bidirectional communication device 12 in FIG. 2) includes a second signal transmitter 511, a second signal receiver 512, a third beam splitter 513, and a second optical lens 514. The second signal transmitter 511 is configured to transmit a second optical signal. The second signal receiver 512 is configured to receive a first optical signal from an endoscope body (e.g., the endoscope body 21 in FIG. 3). The third beam splitter 513 is configured to transmit at least a portion of the second optical signal and reflect at least a portion of the first optical signal. The second optical lens 514 is located between the third beam splitter 513 and the endoscope, the second optical lens 514 including a collimating lens and/or a diverging lens. The second optical lens 514 refers to an optical lens group that, after the second optical signal passes through the third beam splitter 513, constrains a beam type of the second optical signal transmitted from the third beam splitter 513, so that a beam type transmitted from the system master 51 is either a parallel beam or a diverged beam. The optical lens group includes one or more optical lenses. For example, the second optical lens 514 may be a collimating lens (such as a second collimating lens 5141 shown in FIG. 8). As another example, the second optical lens 514 may be a diverging lens (such as a second diverging lens 6142 shown in FIG. 9).

The second signal transmitter 511 may be configured to convert a signal (e.g., an electrical signal) carrying data to be transmitted into an optical signal (e.g., a control signal) for transmitting data on the side of the system master 51 to the endoscope body (e.g., the endoscope body 21 in FIG. 3) via optical communication. For example, an electrical signal is converted to the second optical signal (with a wavelength of λ2) and transmitted. In some embodiments, the second signal transmitter 511 includes a semiconductor light-emitting diode or a laser diode (known as an LD laser). In some embodiments, the second signal transmitter 511 may have the same or similar structure and operating principle as the first signal transmitter (e.g., the first signal transmitter 211 in FIG. 3).

The second signal receiver 512 may be configured to convert a received optical signal into an electrical signal to obtain data corresponding to the electrical signal. For example, the first optical signal (with a wavelength of λ1) is received and converted into an electrical signal. In some embodiments, the second signal receiver 512 includes a photodetector, for example, a phototube, a photomultiplier tube, a photoconductive detector, a photovoltaic detector, or the like. In some embodiments, the second signal receiver 512 has the same structure, and works the same or similar as the first signal receiver (e.g., the first signal receiver 212 in FIG. 3).

Based on the system master 51 of the above embodiment, the second optical signal sent by the second signal transmitter 511 is incident on the third beam splitter 513 during data transmission from the system master 51 to the endoscope (e.g., the endoscope body 21 in FIG. 3). The third beam splitter 513 may allow the second optical signal to pass through and cause the second optical signal to be incident on the second optical lens 514 to cause the second optical signal to be transmitted from one end of the system master 51. The second optical lens 514 may process the incident second optical signal so that the second optical signal transmitted from the second optical lens 514 is always a diverged beam or a parallel beam. In the process of receiving data by the system master 51, the first optical signal may be incident on the second signal receiver 512 after passing through the second optical lens 514, or the first optical signal may be first incident on the third beam splitter 513, then the third beam splitter 513 may reflect the first optical signal so that the incident first optical signal may be reflected into the second signal receiver 512 (when the third beam splitter 513 is configured to reflect at least a portion of the first optical signal into the second signal receiver 512).

In some embodiments, the system master 51 further includes a second isolator 515. The second isolator 515 is disposed at an emission end of the second signal transmitter 511, and the second isolator 515 is configured to isolate the second signal transmitter 511 from interference from external signals. In some embodiments, the second isolator 515 may be disposed between the second signal transmitter 511 and the third beam splitter 513. In some embodiments, the second isolator 515 may be configured to allow the second optical signal transmitted from the second signal transmitter 511 to pass while preventing a reflected beam from the third beam splitter 513 and/or a natural light within the system master 51 from passing through. In some embodiments, the second isolator 515 may be an isolation sheet. In some embodiments, the second isolator 515 may have the same structure, and operate on the same or similar principles as a first isolator (e.g., the first isolator 215 in FIG. 3).

In some embodiments, the system master 51 further includes a fourth beam splitter 516. The fourth beam splitter 516 is located at an incident end of the second signal receiver 512, and the fourth beam splitter 516 is configured to isolate the second signal receiver 512 from interference from external signals. In some embodiments, the fourth beam splitter 516 may be disposed between the third beam splitter 513 and the second signal receiver 512. The fourth beam splitter 516 may isolate the second signal receiver 512 from interference from external signals, e.g., filter optical signals entering the second signal receiver 512 to allow only optical signals of a specific wavelength to pass through, and isolate optical signals of other wavelengths (e.g., the second optical signals transmitted from the second signal transmitter 511, or natural light within the system master 51, etc.).

In some embodiments, the fourth beam splitter 516 may be used in conjunction with the second isolator 515 in other embodiments of the present disclosure. For example, in the embodiment shown in FIG. 8, the second isolator 515 is arranged between the second signal transmitter 511 and the third beam splitter 513, and the second beam splitter 516 is arranged between the third beam splitter 513 and the second signal receiver 512.

In some embodiments, as shown in FIG. 8, the second optical lens 514 includes the second collimating lens 5141. The second collimating lens 5141 is configured to collimate the second optical signal and couple the first optical signal. For example, in the embodiment shown in FIG. 8, a beam of the second optical signal transmitted from the third beam splitter 513 is a diverged beam, and when the diverged beam is incident on the second collimating lens 5141, the diverged beam is converted by the second collimating lens 5141 into a parallel beam and transmitted. In some embodiments, the second collimating lens 5141 may be the same or similar to the first collimating lens 2141.

In the embodiment of the present disclosure, through the design of the above structure and setting different wavelengths of the system master and the system slave, full-duplex communication can be realized. For example, while the endoscope body (e.g., the endoscope body 21 in FIG. 3) transmits a signal (e.g., data), the endoscope body can receive a signal sent by the system master 51 synchronously, and while the system master 51 transmits a signal, the system master 51 can also receive a signal sent by the endoscope body synchronously.

In some embodiments, the second optical lens 514 may include one or more second collimating lenses 5141. In some embodiments, when the second optical lens 514 includes a plurality of second collimating lenses 5141, beams of the second optical signals transmitted from the plurality of second collimating lenses 514 may have the same cross-sectional dimensions at an emission end surface. In some embodiments, beams of the second optical signals transmitted from the plurality of second collimating lenses 514 may have different cross-sectional dimensions at the emission end surface.

In some embodiments, along a direction of a center axis of the first optical signal, a projection area of the first optical signal on the second collimating lens 5141 is a third area, a lens area of the second collimating lens 5141 is a fourth area. A ratio of the third area to the fourth area is greater than or equal to a second predetermined ratio. In some practical application scenarios, when a center axis of a beam of the second optical signal transmitted from the system master 51 is spaced apart from a center axis of a beam of the first optical signal transmitted from the endoscope (e.g., the endoscope body 21 in FIG. 3) by a certain distance (as shown in FIG. 12), this corresponds to the center axis of the beam of the first optical signal not overlapping with a center axis of a lens surface of the second collimating lens 5141, which may lead to the beam of the first optical signal not being able to completely cover the lens surface of the second collimating lens 5141, which in turn results in that the projection area (e.g., the third area) of the first optical signal on the second collimating lens 5141 is smaller than the lens surface area (e.g., the fourth area) of the second collimating lens 5141. To maintain the reception power on one side of the system master 51 to meet a target requirement, it is necessary to limit a minimum value of the ratio of the third area to the fourth area (e.g., the second predetermined ratio). In some embodiments, the second predetermined ratio is in a range greater than 0 and less than 100%. It will be appreciated that when the ratio of the third area to the fourth area is 0, it indicates that the lens surface of the second collimating lens 5141 does not receive the first optical signal. When the ratio of the third area to the fourth area is 100%, it indicates that all regions of the lens surface of the second collimating lens 5141 receive the first optical signal.

In some embodiments, the ratio of the third area to the fourth area is greater than or equal to 10%. In some embodiments, the ratio of the third area to the fourth area is greater than or equal to 30%. In some embodiments, the ratio of the third area to the fourth area is greater than or equal to 70%. In some embodiments, the ratio of the third area to the fourth area is greater than or equal to 90%. In some embodiments, the ratio of the third area to the fourth area may be determined in the same or similar manner as a ratio of a first area to a second area.

FIG. 9 is a schematic diagram illustrating an exemplary structure of a second bidirectional communication device disposed in a system master according to some other embodiments of the present disclosure. In some embodiments, as shown in FIG. 9, the second optical lens 614 includes a second diverging lens 6142. The second diverging lens 6142 is configured to diverge a second optical signal and couple a first optical signal. For example, as shown in FIG. 9, when a beam of the second optical signal is incident on the second diverging lens 6142, beams transmitted from the second diverging lens 6142 are all diverged beams. In some embodiments, other components of the system master 51 (e.g., the second signal transmitter 511, the second signal receiver 512, the third beam splitter 513, the second isolator 515, and the fourth beam splitter 516) in this embodiment are the same as or similar to the system master 51 in FIG. 8, except for a different type of the second optical lens 614. In some embodiments, the second diverging lens 6142 operates in the same or a similar manner as the first diverging lens 3142 of FIG. 4, and will not be described herein.

In some embodiments, the second optical lens 614 includes one or more second diverging lenses 6142. In some embodiments, when the second optical lens 614 includes a plurality of second diverging lenses 6142, divergence angles of the second optical signal transmitting from each of the plurality of second diverging lenses 6142 may be the same or different.

In some embodiments, the embodiment of FIG. 8 and the embodiment of FIG. 9 may be combined. For example, a second optical lens includes a second collimating lens and a second diverging lens, and the second collimating lens and the second diverging lens together change an optical path of the second optical signal and couple a first optical signal.

In some embodiments, the second optical lens may include a second collimating lens and a second diverging lens. The second collimating lens is disposed between the third beam splitter and the second diverging lens. The second collimating lens is configured to collimate the second optical signal and then the second optical signal is incident on the second diverging lens, and the second diverging lens is configured to diverge the second optical signal transmitted from the second collimating lens.

FIG. 10 is a schematic diagram illustrating an exemplary structure of a second bidirectional communication device disposed at a system master according to some other embodiments of the present disclosure. In some embodiments, the second optical lens 714 includes a second diverging lens 7142 and a second collimating lens 7141, as shown in FIG. 10. The second diverging lens 7142 is configured to diverge a second optical signal and then the second optical signal is incident on the second collimating lens 7141. The second collimating lens 7141 is configured to collimate the second optical signal (with a wavelength of λ2). The second collimating lens 7141 and the second diverging lens 7142 are further configured to couple a first optical signal (with a wavelength of λ1). In some embodiments, other components (e.g., the second signal transmitter 511, the second signal receiver 512, the third beam splitter 513, the second isolator 515, and the fourth beam splitter 516) of a system master 71 in FIG. 10 are the same as or similar to the system master 51 in FIG. 8, except for differences in the second optical lens 714.

In this embodiment, when the second optical signal transmitted from the second signal transmitter 511 passes through the third beam splitter 513, the second optical signa is first incident on the second diverging lens 7142, and then incident on the second collimating lens 7141 after being diverged by the second diverging lens 7142, which is then converted into a parallel beam by the second collimating lens 7141 and transmitted. A first optical signal transmitted from an endoscope body is sequentially incident on the third beam splitter 513 after passing through the second collimating lens 7141 and the second diverging lens 7142, and then is reflected by the third beam splitter 513 to the fourth beam splitter 516, and finally passes through the fourth beam splitter 516 into the second signal receiver 512. Additionally, the second collimating lens 7141 and the second diverging lens 7142 may couple the first optical signal to make the first optical signal and the second optical signal transmitted within the same communication link.

In some embodiments, since the second optical lens 714 includes the second diverging lens 7142, the second optical signal transmitted from the second signal transmitter 511 can be diverged by the second diverging lens 7142, thereby increasing a divergence angle of the second optical signal. Furthermore, since the second optical lens 714 further includes the second collimating lens 7141, a diverged beam transmitted from the second diverging lens 7142 can be collimated by the second collimating lens 7141. Through the cooperation of the second diverging lens 7142 and the second collimating lens 7141, it is possible to solve the problem of the restriction of an emission angle of the second signal transmitter 511 (e.g., a second LD laser), which is equivalent to converting the second signal transmitted from the second signal transmitter 511 into a parallel beam with a larger diameter. Even when a center axis of a beam of the second optical signal (e.g., a main ray) deviates from a center axis of a beam of the first optical signal, data transmission of the target reception power is maintained, thereby reducing the requirement for installation accuracy while maintaining communication efficiency.

In some embodiments, a second optical lens (e.g., the second optical lens 514, the second optical lens 614, and the second optical lens 714) includes a second focusing lens, and the second focusing lens may be combined with a second collimating lens (e.g., the second collimating lens 5141 and the second collimating lens 7141) and/or a second diverging lens (e.g., the second diverging lens 6142 and the second diverging lens 7142), such that a beam transmitted from the second optical lens is a diverged beam or a parallel beam, as will not be further described.

In some embodiments, along a direction of the center axis of the first optical signal, a projection area of the first optical signal on the second collimating lens 7141 is a third area, a lens area of the second collimating lens 7141 is a fourth area, and a ratio of the third area to the fourth area is greater than or equal to a second predetermined ratio. In some embodiments, the ratio of the third area to the fourth area is greater than or equal to 10%. In some embodiments, the ratio of the third area to the fourth area is greater than or equal to 30%. In some embodiments, the ratio of the third area to the fourth area is greater than or equal to 70%. In some embodiments, the ratio of the third area to the fourth area is greater than or equal to 90%. In some embodiments, the ratio of the third area to the fourth area may be determined in the same or similar manner as a ratio of a first area to a second area.

In some embodiments, a cross-sectional dimension of a beam of the second optical signal at an emission end surface of the second optical lens (e.g., the second optical lens 514, the second optical lens 614, and the second optical lens 714) is a third cross-sectional dimension, and a cross-sectional dimension of a beam of the second optical signal at an incident end surface of the second optical lens is a fourth cross-sectional dimension. The third cross-sectional dimension is greater than the fourth cross-sectional dimension. This is equivalent to the second optical lens increasing a maximum distance between a system master (e.g., the system master 51, the system master 61, and the system master 71) and an endoscope body for data transmission, further reducing the effect of the distance between the system master and the endoscope body on the quality of a transmitted signal. For example, as shown in FIG. 8, a cross-sectional dimension of the beam of the second optical signal at an emission end surface of the second collimating lens 5141 is greater than a cross-sectional dimension of the beam of the second optical signal at an incident end surface of the second collimating lens 5141. As another example, as shown in FIG. 9, a cross-sectional dimension of the beam of the second optical signal at an emission end surface of the second diverging lens 6142 is greater than a cross-sectional dimension of the beam of the second optical signal at an incident end surface of the second diverging lens 6142. As another example, as shown in FIG. 10, a cross-sectional dimension of the beam of the second optical signal at an emission end surface of the second collimating lens 7141 is greater than a cross-sectional dimension of the beam of the second optical signal at an incident end surface of the second diverging lens 7142. As another example, based on the embodiment shown in FIG. 10, the second collimating lens 7141 is arranged between the second diverging lens 7142 and the third beam splitter 513, and the cross-sectional dimension (e.g., a third cross-sectional dimension) of the beam of the second optical signal at the emission end surface of the second diverging lens 7142 is greater than the cross-sectional dimension (e.g., the fourth cross-sectional dimension) of the beam of the second optical signal at the incident end surface of the second collimating lens 7141. In other embodiments, the third cross-sectional dimension may be less than or equal to the fourth cross-sectional dimension.

In some embodiments, a divergence angle of the beam of the second optical signal transmitted from the second optical lens (e.g., the second optical lens 614) is a third divergence angle, and a divergence angle of the beam of the second optical signal incident on the second optical lens is a fourth divergence angle. The third divergence angle is greater than the fourth divergence angle. Since the third divergence angle is greater than the fourth divergence angle, it is equivalent to the second optical lens diverging the second optical signal, thereby increasing a divergence angle of the second optical signal and improving a transmission distance of the second optical signal. For example, as shown in FIG. 9, beams transmitted from the second diverging lens 6142 are diverged beams, and beams incident on the second diverging lens 6142 are also diverged beams, but the third divergence angle is greater than the fourth divergence angle. As another example, according to the embodiment shown in FIG. 10, the second collimating lens 7141 is provided between the second diverging lens 7142 and the third beam splitter 513, and a divergence angle of the second optical signal transmitted from the second diverging lens 7142 is greater than a divergence angle of the second optical signal incident on the second collimating lens 7141. In other embodiments, the third divergence angle may be less than or equal to the fourth divergence angle.

In some embodiments, the second optical lens (e.g., the second optical lens 514, the second optical lens 614, and the second optical lens 714) may include one or more second collimating lenses and/or one or more second diverging lenses, about which may be referred to the relevant description of the first optical lens.

In some embodiments, when the second optical lens (e.g., the second optical lens 514, the second optical lens 614, and the second optical lens 714) includes a plurality of second diverging lenses and/or a plurality of second collimating lenses, the beam of the first optical signal may have the same cross-sectional dimensions at an emission end surface of each of the second diverging lens and the second collimating lens. In some embodiments, the beam of the second optical signal may have different cross-sectional dimensions at an emission end surface of the second diverging lens and the second collimating lens.

In some embodiments, when the second optical lens (e.g., the second optical lens 614 and the second optical lens 714) includes a plurality of second diverging lenses, the divergence angle of the second optical signal transmitting from each of the second diverging lenses may be the same. In some embodiments, the divergence angle of the second optical signal transmitting from each of the second diverging lenses may be different.

In some embodiments, a divergence angle of the first optical signal transmitted from the first optical lens (e.g., the first optical lens 214 in FIG. 3, the first optical lens 314 in FIG. 4, and the first optical lens 414 in FIG. 7) is the same as the divergence angle of the second optical signal transmitted from the second optical lens (e.g., the second optical lens 514, the second optical lens 614, and the second optical lens 714), thereby further improving the stability of the bidirectional signal transmission, which in turn results in a higher quality of a data signal received by the system master 51 and the endoscope body 21. For example, the first optical lens 214 and the second optical lens 514 both transmit parallel beams. As another example, the first optical lens 314 and the second optical lens 614 both transmit diverged beams with the same divergence angle.

In some embodiments, both the first optical signal and the second optical signal include at least one wavelength, and wavelengths contained in the first optical signal and the second optical signal are not entirely identical, so as to enable the second signal receiver 512 and a first signal receiver (e.g., the second signal receiver 212 in FIG. 3) to generate different electrical signals upon receiving the second optical signal and the first optical signal, respectively. For example, the first optical signal and the second optical signal may both include a plurality of wavelengths, and the first optical signal and the second optical signal include at least one different wavelength. As another example, the first optical signal and the second optical signal may both include a plurality of wavelengths, and wavelengths contained in the first optical signal and the second optical signal are completely different. Furthermore, for example, the first optical signal and the second optical signal may both include one wavelength, and wavelengths contained in the first optical signal and the second optical signal are different.

In some embodiments, the above purpose can be achieved by providing a component in an optical path that changes a wavelength composition of the optical signal, so that the second signal receiver 512 and the first signal receiver may generate different electrical signals after receiving the second optical signal and the first optical signal, respectively. For example, the system master 51 further includes a third filter (not shown in the figures), the third filter is provided at an emission end of the second signal transmitter 511, and the third filter is configured such that the second optical signal and the first optical signal include at least one different wavelength. For example, the system master 51 further includes a fourth filter. The fourth filter is disposed at an incident end of the second signal receiver 512, and the fourth filter is configured so that the first optical signal and the second optical signal include at least one different wavelength. In some embodiments, the third filter may be the same as or similar to the first filter in other embodiments of the present disclosure, and the fourth filter may be the same as or similar to the second filter in other embodiments of the present disclosure.

In some embodiments, the third filter may be used in conjunction with the fourth filter. For example, the third filter filters the second optical signal transmitting from the second signal transmitter 511, and the fourth filter filters the first optical signal incident on the second signal receiver 512.

In some embodiments, a sensitive range of the second signal receiver 512 on the system master 51 may be varied so that the first signal receiver and the second signal receiver 512 are capable of generating different electrical signals after receiving the first optical signal and the second optical signal, respectively. For example, both the first optical signal and the second optical signal include a plurality of wavelengths, and a sensitive range of the first signal receiver and the sensitive range of the second signal receiver 512 are partially different. As another example, both the first optical signal and the second optical signal include a plurality of wavelengths, and the sensitive range of the first signal receiver and the sensitive range of the second signal receiver 512 do not overlap at all. As another example, both the first optical signal and the second optical signal include a plurality of identical wavelengths, and the sensitive range of the first signal receiver and the sensitive range of the second signal receiver 512 are completely independent and do not overlap with each other. As another example, both the first optical signal and the second optical signal include one different wavelength, and the sensitive range of the first signal receiver and the sensitive range of the second signal receiver 512 do not overlap at all. In some embodiments, both the first optical signal and the second optical signal include a plurality of identical wavelengths, and the sensitive range of the first signal receiver and the sensitive range of the second signal receiver 512 are completely independent and do not overlap.

In some embodiments, each of the foregoing embodiments may be combined to enable the first signal receiver and the second signal receiver 512 to generate different electrical signals upon receiving the first optical signal and the second optical signal, respectively. For example, the third filter and/or the fourth filter are provided in such a way that the sensitive range of the first signal receiver and the sensitive range of the second signal receiver 512 are completely independent of each other and do not fully overlap. Further details regarding the wavelengths of the first optical signal and the second optical signal can be found in the descriptions of other embodiments of the present disclosure.

In some embodiments, the third beam splitter 513 may be configured to fully transmit the second optical signal as well as to reflect a portion of the first optical signal to the second signal receiver 512, as shown in FIG. 8. In some embodiments, the third beam splitter 513 may be configured to transmit a portion of the second optical signal as well as reflect a portion of the first optical signal to the second signal receiver 512. In some embodiments, the third beam splitter 513 is configured to fully transmit the second optical signal as well as fully reflect the first optical signal to the second signal receiver 512, thereby increasing an emission power of the second optical signal as well as increasing a reception power of the first optical signal.

In some embodiments, an axis of the second signal transmitter 511 is perpendicular to an axis of the second signal receiver 512. In some embodiments, an angle between the third beam splitter 513 and a center axis of the second signal transmitter 511 is in a range of 30 degrees to 60 degrees. For example, the angle between the third beam splitter 513 and the center axis of the second signal transmitter 511 is 45 degrees, and since the axis of the second signal transmitter 511 is perpendicular to the center axis of the second signal receiver 512, the angle between the third beam splitter 513 and the center axis of the second signal receiver 512 is 45 degrees. In some embodiments, the third beam splitter 513 is a beam splitter, which is configured to break down optical signals of different wavelengths to fully transmit the second optical signal and fully reflect the first optical signal. In some embodiments, the third beam splitter 513 has the same or similar structure and operating principle as a first beam splitter (e.g., the first beam splitter 213 in FIG. 3).

In some embodiments, an angle between an incident optical surface of the fourth beam splitter 516 and the center axis of the second signal transmitter 511 is in a range of 0 degrees to 5 degrees. For example, the angle between the incident optical surface of the fourth beam splitter 516 and the center axis of the second signal transmitter 511 is 0 degrees. In some embodiments, the fourth beam splitter 516 is a beam splitter that is configured to break down optical signals of specific wavelengths, thereby achieving full transmission of optical signals of specific wavelengths and isolating optical signals of other wavelengths. In some embodiments, the fourth beam splitter 516 has the same or similar structure and operating principle as a second beam splitter (e.g., the second beam splitter 216 in FIG. 3).

In some embodiments, the first optical signal and the second optical signal may include a high-speed signal and/or a low-speed signal. For example, the first optical signal is a status signal and the second optical signal is a control signal, both of the first optical signal and the second optical signal are low-speed signals. For example, the first optical signal is a feedback signal and the second optical signal is a control signal. The feedback signal is a high-speed signal and the control signal is a low-speed signal. As another example, the first optical signal includes a feedback signal and a status signal. The feedback signal is a high-speed signal and the status signal is a low-speed signal. Further details about the high-speed signal and the low-speed signal can be found in the descriptions of other embodiments in the present disclosure and will not be repeated here.

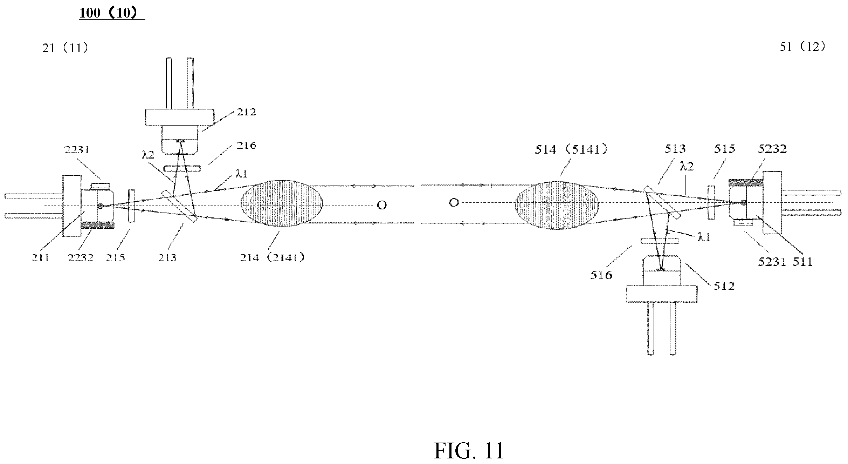

The following will further illustrate a positional relationship between the first bidirectional communication device 11 provided in a system slave (e.g., the endoscope body 21 of the endoscope system 100) and the second bidirectional communication device 12 provided in a system master 51 (e.g., the system master 51 of the endoscope system 100) as shown in FIG. 11 to FIG. 14, as an example.

In some embodiments, an endoscope body in FIG. 3 to FIG. 7 (e.g., the endoscope body 21, the endoscope body 31, and the endoscope body 41) may be combined with a system master in FIG. 8 to FIG. 10 (e.g., the system master 51, the system master 61, and the system master 71) to form different endoscope systems. For example, the endoscope body 21 in FIG. 3 and the system master 51 in FIG. 8 may constitute the endoscope system 100 in FIG. 11. As another example, the endoscope in FIG. 3 and the system master 61 in FIG. 9 may form an endoscope system. As another example, the endoscope body 21 in FIG. 4 and the system master 51 in FIG. 9 may form an endoscope system 200 in FIG. 12. Exemplary structures of two endoscope systems will be described below in conjunction with FIG. 11 and FIG. 12.

FIG. 11 is a schematic diagram illustrating an exemplary structure of a bidirectional communication system according to some embodiments of the present disclosure. FIG. 11 exemplarily shows a structure of a bidirectional communication system when applied to an endoscope system. In some embodiments, the endoscope system 100 may be viewed as a combination of the endoscope body 21 in FIG. 3 and the system master 51 in FIG. 8. In some embodiments, the endoscope body 21 includes the first signal transmitter 211, the first signal receiver 212, the first beam splitter 213, and the first optical lens 214. The first signal transmitter 211 is configured to transmit a first optical signal. The first signal receiver 212 is configured to receive a second optical signal transmitted from the system master 51. The first beam splitter 213 is configured to transmit at least a portion of the first optical signal and reflect at least a portion of the second optical signal. The first optical lens 214 is located between the first beam splitter 213 and the system master 51, and the first optical lens 214 includes a collimating lens and/or a diverging lens. The system master 51 includes the second signal transmitter 511, the second signal receiver 512, the third beam splitter 513, and the second optical lens 514. The second signal transmitter 511 is configured to transmit the second optical signal. The second signal receiver 512 is configured to receive the first optical signal transmitted from the endoscope body 21. The third beam splitter 513 is configured to transmit at least a portion of the second optical signal and reflect at least a portion of the first optical signal. The second optical lens 514 is located between the third beam splitter 513 and the endoscope body 21, and the second optical lens 514 includes a collimating lens and/or a diverging lens.

In some embodiments, the endoscope body 21 further includes the first isolator 215. The first isolator 215 is disposed at an emission end of the first signal transmitter 211. The first isolator 215 is configured to isolate the first signal transmitter 211 from interference from external signals. In some embodiments, the endoscope body 21 further includes the second beam splitter 216. The second beam splitter 216 is disposed at an incident end of the first signal receiver 212, and the second beam splitter 216 is configured to isolate the first signal receiver 212 from interference from external signals. The endoscope body 21 in this embodiment may have the same or similar structure as the endoscope body 21 in FIG. 3. More details of the individual components of the endoscope body 21 (e.g., the first signal transmitter 211, the first signal receiver 212, the first beam splitter 213, the first optical lens 214, the first isolator 215, and the second beam splitter 216) are described in more detail in other embodiments of this disclosure, which will not be repeated herein.

In some embodiments, the system master 51 further includes a second isolator 515. The second isolator 515 is disposed at an emission end of the second signal transmitter 511, and the second isolator 515 is configured to isolate the second signal transmitter 511 from interference from external signals. In some embodiments, the system master 51 further includes a fourth beam splitter 516. The fourth beam splitter 516 is disposed at an incident end of the second signal receiver 512, and the fourth beam splitter 516 is configured to isolate the second signal receiver 512 from interference from external signals. The system master 51 in this embodiment may have the same or similar structure as the system master 51 in FIG. 8, and more details of the components of the system master 51 (e.g., the second signal transmitter 511, the second signal receiver 512, the third beam splitter 513, the second optical lens 514, the second isolator 515, and the fourth beam splitter 516) are described in detail in other embodiments in the present disclosure, and will not be repeated herein.

In some embodiments, the first optical lens includes the same type of optical lens as the second optical lens includes. In some embodiments, as shown in FIG. 11, the first optical lens 214 includes the first collimating lens 2141. The first collimating lens 2141 is configured to collimate the first optical signal and couple the second optical signal. The second optical lens 514 includes the second collimating lens 5141. The second collimating lens 5141 is configured to collimate the second optical signal and couple the first optical signal.

In some embodiments, the first optical lens 214 includes a first diverging lens (e.g., the first diverging lens 3142 in FIG. 4). The first diverging lens is configured to diverge the first optical signal and couple the second optical signal. The second optical lens 614 includes a second diverging lens (e.g., the second diverging lens 6142 in FIG. 4). The second diverging lens is configured to diverge the second optical signal and couple the first optical signal.

In some embodiments, the types of optical lenses included in the first optical lens are different from those included in the second optical lens. In some alternative embodiments, the first optical lens 214 includes a first diverging lens (e.g., the first diverging lens 3142 in FIG. 4) and the second optical lens 514 includes the second collimating lens 5141. In some alternative embodiments, the first optical lens 214 includes the first collimating lens 2141 and the second optical lens 614 includes a second diverging lens. Further description of the first collimating lens 2141, the first diverging lens, the second collimating lens 5141, and the second diverging lens will be repeated herein.

In some embodiments, a divergence angle of the first optical signal transmitted from the first optical lens 214 is the same as a divergence angle of the second optical signal transmitted from the second optical lens 514 to make the process of bidirectional signal transmission stable, which in turn results in the system master 51 and the endoscope body 21 receive data signals of high quality. For example, the first optical lens 214 and the second optical lens 514 both include a diverging lens, and a divergence angle of a beam transmitted from the first optical lens 214 is the same as a divergence angle of a beam transmitted from the second optical lens 514. As another example, in FIG. 11, the first optical lens 214 includes the first collimating lens 2141, and the system master 51 includes the second collimating lens 5141, and the beams transmitted from the first collimating lens 2141 and the second collimating lens 5141 have the same divergence angle (both 0 degrees). As another example, in the embodiment shown in FIG. 12, the endoscope body 41 includes the first collimating lens 4141 and the first diverging lens 4142, the system master 71 includes the second collimating lens 7141 and the second diverging lens 7142, a divergence angle of a beam of the first optical signal transmitted from the first collimating lens 4141 of the endoscope body 41 and a divergence angle of a beam of the second optical signal transmitted from the second collimating lens 7141 of the system master 71 are the same.

In some embodiments, the divergence angle of the first optical signal transmitted from the first optical lens 214 is the same as the divergence angle of the second optical signal transmitted from the second optical lens 514, and center axes of beams of optical signals transmitted from the first optical lens 214 and the second optical lens 514 (e.g., a main ray, as denoted by O in FIG. 4 or FIG. 9) are coaxial. This further improves the stability of the bidirectional signal transmission, which in turn results in a high quality of the data signals received by the system master 51 and the endoscope body 21.

In other embodiments, divergence angles of the beams of the first optical signal and the second optical signal are different. For example, the beam of the first optical signal has a divergence angle of 0. For example, the first optical signal is a parallel beam. The beam of the second optical signal has a divergence angle of 45 degrees, e.g., the second optical signal is a diverged beam. In some embodiments, a main ray of the first optical signal transmitting from the first optical lens 214 and a main ray of the second optical signal transmitting from the second optical lens 514 may not overlap, as illustrated in FIG. 12.

As shown in FIG. 11, a first bidirectional communication device (e.g., the first bidirectional communication device 11 in FIG. 1) provided in a system slave (e.g., the endoscope body 21) and a second bidirectional communication device (e.g., the second bidirectional communication device 12 in FIG. 1) provided in a system master (e.g., the system master 51) may be provided opposite to each other. For example, the main ray of the first optical signal transmitting from the first optical lens 214 overlaps with the main ray of the second optical signal transmitting from the second optical lens 514. Wavelengths of the first optical signal and the second optical signal are arranged to be matched. For example, the first bidirectional communication device 11 transmits a first signal (e.g., an optical signal), and receives a second signal (e.g., a second optical signal with an optical wavelength of λ2). For example, the first signal is a first optical signal (with an optical wavelength of λ1). The second bidirectional communication device 12 transmits a second signal (e.g., a second optical signal with an optical wavelength of λ2), and receives a first signal (e.g., a first optical signal with an optical wavelength of λ1), thereby realizing contactless and synchronous bidirectional communication between the system master 51 and the endoscope body 21.

FIG. 12 is a schematic diagram illustrating an exemplary structure of a bidirectional communication system according to some other embodiments of the present disclosure. FIG. 12 exemplarily shows a structure of another bidirectional communication system when applied to an endoscope system. In some embodiments, the endoscope system 200 may be viewed as a combination of the endoscope body 41 in FIG. 7 and the system master 71 in FIG. 10. In some embodiments, the endoscope body 41 includes the first signal transmitter 211, the first signal receiver 212, the first beam splitter 213, and the first optical lens 414. The first signal transmitter 211 is configured to transmit a first optical signal. The first signal receiver 212 is configured to receive a second optical signal transmitted from the system master 51. The first beam splitter 213 is configured to transmit at least a portion of the first optical signal and reflect at least a portion of the second optical signal. The first optical lens 414 is located between the first beam splitter 213 and the system master 51 and includes a collimating lens and/or a diverging lens. The system master 71 includes the second signal transmitter 511, the second signal receiver 512, the third beam splitter 513, and the second optical lens 714. The second signal transmitter 511 is configured to transmit the second optical signal. The second signal receiver 512 is configured to receive the first optical signal transmitted from the endoscope body 41. The third beam splitter 513 is configured to transmit at least a portion of the second optical signal and reflect at least a portion of the first optical signal. The second optical lens 714 is located between the third beam splitter 513 and the endoscope body 41, and the second optical lens 714 includes a collimating lens and/or a diverging lens.

The endoscope system 200 in this embodiment differs from the endoscope system 100 in FIG. 11 in that the first optical lens 214 of the endoscope system 100 includes the first collimating lens 2141, and the second optical lens 514 includes the second collimating lens 5141. The first optical lens 414 of the endoscope system 200 includes the first collimating lens 4141 and the first diverging lens 4142. The first diverging lens 4142 is disposed between the first collimating lens 4141 and the first beam splitter 213, and the first optical lens 414 may diverge and collimate the first optical signal to expand a transmission distance of the first optical signal. The second optical lens 714 includes the second collimating lens 7141 and the second diverging lens 7142, the second diverging lens 7142 is disposed between the second collimating lens 7141 and the third beam splitter 513, and the second optical lens 714 may diverge and collimate the second optical signal to expand a transmission distance of the second optical signal. Further details about the first optical lens 414 and the second optical lens 714 can be found in the descriptions of FIG. 7 and FIG. 10 and embodiments thereof.

In some embodiments, the endoscope body 21 further includes the first isolator 215 and/or the second beam splitter 216, and the system master 51 further includes the second isolator 515 and/or the fourth beam splitter 516, as will not be described.

It should be noted that FIG. 12 is intended to exemplarily illustrate an exemplary structure of the endoscope system 200 for illustrative purposes only, and does not intend to limit the specific structure of the endoscope system 200, and in actual application scenarios, the structure of the endoscope system 200 can be transformed as needed in practical application scenarios. For example, based on the embodiment illustrated in FIG. 12, positions of the first collimating lens 4141 and the first diverging lens 4142 are changed, and the first collimating lens 4141 is disposed between the first diverging lens 4142 and the first beam splitter 213, and/or positions of the second collimating lens 7141 and the second diverging lens 7142 are changed, and the second collimating lens 7141 is disposed between the second diverging lens 7142 and the third beam splitter 513. As another example, based on the embodiment shown in FIG. 12, a count of the first collimating lens 4141 and/or the first diverging lens 4142 can be changed, and/or a count of the second collimating lens 7141 and/or the second diverging lens 7142 may be changed. For more details on changing the count of the first collimating lens 4141, the first diverging lens 4142, the second collimating lens 7141, and the second diverging lens 7142, please refer to other embodiments of the present disclosure for a description.

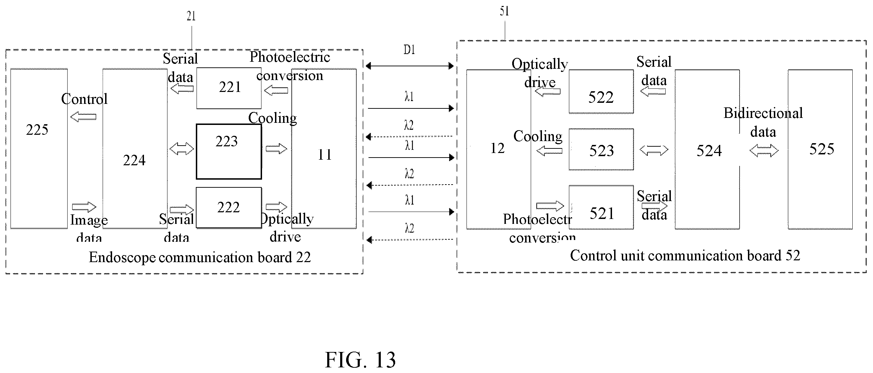

FIG. 13 is a schematic diagram illustrating a positional relationship between a first bidirectional communication device disposed in an endoscope body and a second bidirectional communication device disposed in a system master according to some embodiments of the present disclosure. FIG. 14 is a schematic diagram illustrating a positional relationship between a first bidirectional communication device disposed in an endoscope body and a second bidirectional communication device disposed in a system master according to some other embodiments of the present disclosure. FIG. 13 and FIG. 14 exemplarily illustrate arrangement manners of the first bidirectional communication device and the second bidirectional communication device. Solid arrows indicate transmission directions of a first optical signal (e.g., an optical signal with a wavelength of λ1). Dashed arrows indicate transmission directions of a second optical signal (e.g., an optical signal with a wavelength of λ2). Based on the first bidirectional communication device 11 and the second bidirectional communication device 12 shown in FIG. 13 and FIG. 14, signals (e.g., a first signal (e.g., the first optical signal) and a second signal (e.g., the second optical signal)) transmitted therefrom, are both parallel beams or diverged beams, whereby the effect of an axial distance between the first bidirectional communication device 11 and the second bidirectional communication device 12 on the quality of the communication can be reduced. For example, in FIG. 13, an axial distance between the first bidirectional communication device 11 of the endoscope body 21 and the second bidirectional communication device 12 of the system master 51 is D1, and D1 is 10 mm. In FIG. 14, an axial distance between the first bidirectional communication device 11 of the endoscope body 21 and the second bidirectional communication device 12 of the system master 51 is D2, and D2 is 20 mm. According to the description of the preceding embodiment, a beam of the first optical signal transmitted from the endoscope body 21 is a parallel beam, and a beam of the second optical signal transmitted from the system master 51 is a parallel beam, so that the quality of the communication between the first bidirectional communication device 11 and the second bidirectional communication device 12 is almost unchanged in the embodiment shown in FIG. 13 and FIG. 14.

In some embodiments, as shown in FIG. 13 and FIG. 14, the endoscope body 21 includes a first optical receiver chip 221, a first optical transmitter chip 222, a first temperature control component 223, a first field programmable gate array (FPGA) chip 224, an image sensor 225, and the first bidirectional communication device 11. The first optical receiver chip 221 is connected to a first signal receiver (e.g., the first signal receiver 212 in FIG. 3) and the first FPGA chip 224, and the first optical receiver chip 221 is configured to transmit data acquired by the first signal receiver (e.g., data converted from the second optical signal) to the first FPGA chip 224. The first optical transmitter chip 222 is communicatively connected to a first signal transmitter (e.g., the first signal transmitter 211 in FIG. 3) and the first FPGA chip 224, and the first optical transmitter chip 222 is configured to receive data transmitted by the first FPGA chip 224 and drive the first signal transmitter to transmit the first optical signal based on the data. The first temperature control component 223 is communicatively connected to the first FPGA chip 224. The first temperature control component 223 is configured to detect a temperature of a first signal transmitter and to cool down the first signal transmitter under the control of the first FPGA chip 224. The image sensor 225 is communicatively connected to the first FPGA chip 224, and the image sensor 225 is configured to acquire image data of a patient. The first FPGA chip 224 is configured to transmit data (e.g., the image data) to the first optical transmitter chip 222 as well as control the image sensor 225 based on a control signal from the system master 51. The first bidirectional communication device 11 is configured to enable bidirectional communication between the endoscope body 21 and the system master 51. The first bidirectional communication device 11 may be the same as, or similar to, the first bidirectional communication device 11 in FIG. 1 to FIG. 2 of the present disclosure, which will not be described herein. In some embodiments, the first optical receiver chip 221, the first optical transmitter chip 222, the first temperature control component 223, the first FPGA chip 224, the image sensor 225, and the first bidirectional communication device 11 constitute an endoscope communication board 22.

In this embodiment, in the process of transmitting data (e.g., image data) from the endoscope body 21 to the system master 51, the first FPGA chip 224 may acquire image data from the image sensor 225, and then convert the image data into serial data and packetize and send the image data to the first optical transmitter chip 222. The first optical transmitter chip 222 may drive the first signal transmitter to transmit the first optical signal based on the serial data. In the process of the endoscope body 21 receiving data (e.g., a control signal) from the system master 51, when the first signal receiver receives the second optical signal, the first signal receiver performs photoelectric conversion of the second optical signal to convert the second optical signal into a corresponding electrical signal and sends the electrical signal to the first optical receiver chip 221. The first optical receiver chip 221 may convert the electrical signal into serial data after receiving the electrical signal and send the serial data to the first FPGA chip 224. The first FPGA chip 224 may control the image sensor 225 based on the received serial data.

In some practical application scenarios, the first signal transmitter generates heat during operation, thereby leading to an increased temperature, and if the temperature is too high, it causes the parameters of the slope of the current-optical power curve of the first signal transmitter in the process of converting an electrical signal into an optical signal to decrease. That is, if the electrical power input to the first signal transmitter remains unchanged, the optical power output from the first signal transmitter is lower, and it is likely to lead to a reduction in the lifetime of the first signal transmitter. In order to solve the above problem, it is necessary to control the temperature of the first signal transmitter, and thus the first signal transmitter works efficiently and prolongs its life.

In some embodiments, shown in conjunction with FIG. 3, FIG. 13, and FIG. 14, the first temperature control component 223 includes a first temperature sensor 2231 and a first cooler 2232. The first temperature sensor 2231 is configured to detect the temperature of the first signal transmitter 211 and transmit an acquired temperature signal to the first FPGA chip 224. The first FPGA chip 224 is further configured to determine whether the temperature of the first signal transmitter 211 is greater than a first temperature threshold or less than a second temperature threshold. If the temperature of the first signal transmitter 211 is greater than the first temperature threshold, the first FPGA chip 224 controls the first cooler 2232 to cool the first signal transmitter 211. If the temperature of the first signal transmitter 211 is less than the second temperature threshold, the first FPGA chip 224 controls the first cooler 2232 to stop operating so that an operation temperature of the first signal transmitter 211 is maintained in a suitable range. In some embodiments, the first temperature sensor 2231 is provided on the first signal transmitter 211. In some embodiments, the first cooler 2232 may be a semiconductor cooler, e.g., a thermally scaled-down cooler, a thermally conductive cooler, or the like. In some embodiments, the first temperature threshold is in a range of 0 degrees to 80 degrees. In some embodiments, the first temperature threshold is in a range of 10 degrees to 50 degrees. In some embodiments, the first temperature threshold is in a range of 10 degrees to 30 degrees. In some embodiments, the second temperature threshold is in a range of -10 degrees to 50 degrees. In some embodiments, the second temperature threshold is in a range of 0 degrees to 50 degrees. In some embodiments, the second temperature threshold is in a range of 0 degrees to 30 degrees. In some embodiments, the second temperature threshold is in a range of 0 degrees to 20 degrees.

In some embodiments, as shown in FIG. 13 and FIG. 14, the system master 51 includes a second optical receiver chip 521, a second optical transmitter chip 522, a second temperature control component 523, a second FPGA chip 524, an external interface 525, and the second bidirectional communication device 12. The second optical receiver chip 521 is communicatively connected to a second signal receiver (e.g., the second signal receiver 512 in FIG. 8) and the second FPGA chip 524. The second optical receiver chip 521 is configured to transmit data acquired by the second signal receiver (e.g., data converted from the first optical signal) to the second FPGA chip 524. The second optical transmitter chip 522 is connected to a second signal transmitter (e.g., the second signal transmitter 511 in FIG. 8) and the second FPGA chip 524, and the second optical transmitter chip 522 is configured to receive data transmitted by the second FPGA chip 524 and drive the second signal transmitter to transmit the second optical signal based on that data. The second temperature control component 523 is communicatively connected to the second FPGA chip 524, and the second temperature control component 523 is configured to detect a temperature of the second signal transmitter and cool down the second signal transmitter under the control of the second FPGA chip 524. The external interface 525 is communicatively connected to an external device (not shown in the figure) and a second FPGA chip, and the second FPGA chip 524 may obtain a control signal from the external interface 525 and transmit the control signal to the first FPGA chip 224 through the second bidirectional communication device 12 and the first bidirectional communication device 11. The first FPGA chip 224 controls the image sensor 225 based on the control signal. The second FPGA chip 524 may also transmit data (e.g., image data) from one side of the endoscope body 21 to the external device connected to the external interface 525. The external device is configured for an operator to input a control signal for controlling the image sensor 225 and for displaying an image based on the image data. Exemplary external devices include devices such as a display, a control handle, or the like. The second bidirectional communication device 12 may be the same as or similar to the second bidirectional communication device 12 in the other embodiments of the present disclosure, which will not be described herein. In some embodiments, the second optical receiver chip 521, the second optical transmitter chip 522, the second temperature control component 523, the second FPGA chip 524, the external interface 525, and the second bidirectional communication device 12 may constitute a system master communication board 52.

In this embodiment, during the transmission of data (e.g., a control signal for controlling the image sensor 225) from the system master 51 to the endoscope body 21, the second FPGA chip 524 may receive the control signal from the external interface 525, and then convert the control signal into serial data and packetize and send the serial data to the second optical transmitter chip 522. The second optical transmitter chip 522 may drive the second signal transmitter to transmit the second optical signal. In the process of the system master 51 receiving data (e.g., image data) from the endoscope body 21, when the second signal receiver receives the first optical signal, the second signal receiver performs photoelectric conversion of the first optical signal to convert the first optical signal into a corresponding electrical signal and send the electrical signal to the second optical receiver chip 521. The second optical receiver chip 521, after receiving the electrical signal, may convert the electrical signal into serial data and send the serial data to the second FPGA chip 524. The second FPGA chip 524 may transmit the serial data to the external interface 525. Finally, an external device (e.g., a monitor) connected to the external interface 525 displays an image based on the serial data.

In some embodiments, in conjunction with FIG. 8 and FIG. 13, the second temperature control component 523 includes a second temperature sensor 5231 and a second cooler 5232. The second temperature sensor 5231 is configured to detect the temperature of the second signal transmitter 511 and transmit an acquired temperature signal to the second FPGA chip 524. The second FPGA chip 524 may determine whether the temperature of the second signal transmitter 511 is greater than a third temperature threshold or less than a fourth temperature threshold. If the temperature of the second signal transmitter 511 is greater than the third temperature threshold, the second FPGA chip 524 controls the second cooler 5232 to cool down the second signal transmitter 511. If the temperature of the second signal transmitter 511 is less than the fourth temperature threshold, the second cooler 5232 is controlled to stop operating so that an operation temperature of the second signal transmitter 511 is maintained in a suitable range. In some embodiments, the second temperature sensor 5231 is provided on the second signal transmitter 511. In some embodiments, the second cooler 5232 may be the same as or similar to the first cooler 2232, e.g., the second cooler 5232 is a semiconductor cooler. In some embodiments, the second temperature control component 523 has the same or similar structure, and works the same or similarly as the first temperature control component 223, and will not be described herein. For example, the third temperature threshold is the same or similar to the first temperature threshold, and the fourth temperature threshold is the same or similar to the second temperature threshold.

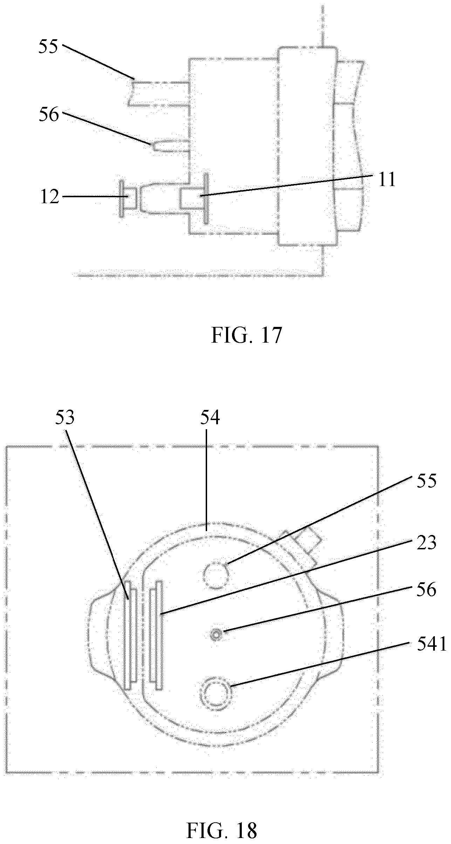

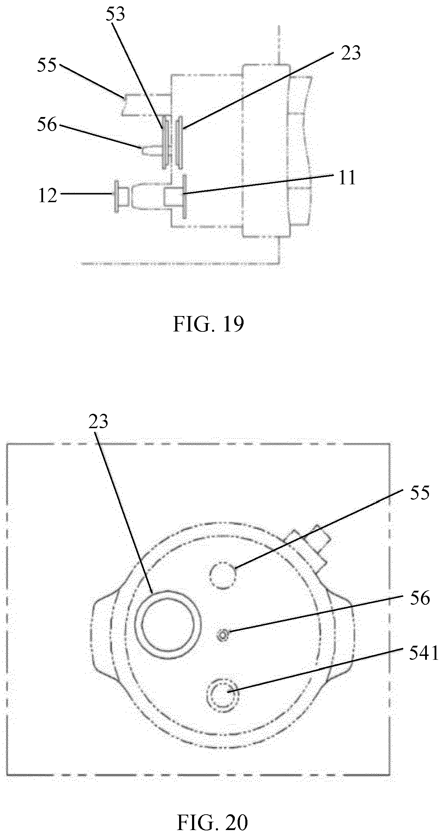

FIG. 15 is a schematic diagram illustrating modules of an endoscope system according to some embodiments of the present disclosure. FIG. 16 is a schematic diagram illustrating an exemplary structure of an endoscope system according to some embodiments of the present disclosure; FIG. 17 is a schematic diagram illustrating a main view of a communication connector of a system master according to some embodiments of the present disclosure; FIG. 18 is a schematic diagram illustrating a top view of a communication connector of a system master according to some embodiments of the present disclosure. FIG. 19 is a schematic diagram illustrating a main view of a communication connector of a system master according to some other embodiments of the present disclosure. FIG. 20 is a schematic diagram illustrating a top view of a communication connector of a system master according to some other embodiments of the present disclosure. In some embodiments, an energy supply component (not shown in the figures), such as a battery, is also provided on both the endoscope body 21 and the system master 51. Various components of the endoscope body 21 and the system master 51 may be powered by a battery. In some embodiments, to downsize the space occupied by the endoscope body 21, the various components of the endoscope body 21 may be powered through wireless energy transfer. In some embodiments, as shown in FIG. 15, the system master 51 (e.g., the second bidirectional communication device 12) includes a wireless energy transmitting coil 53, and the endoscope body 21 (e.g., the first bidirectional communication device 11) includes a wireless energy receiving coil 23. The wireless energy transmitting coil 53 is provided in correspondence with the wireless energy receiving coil 23. For example, the wireless energy transmitting coil 53 is provided on a power supply board (not shown in the drawings) of the system master 51, and the wireless energy receiving coil 23 is provided on a power supply board of the endoscope body 21. The corresponding arrangement means that the wireless energy transmitting coil 53 is parallel to an axial direction of the wireless energy receiving coil 23. In some embodiments, after setting up the wireless energy transmitting coil 53 and the wireless energy receiving coil 23, a magnetic field can be generated when the wireless energy transmitting coil 53 is energized with an electric current. Such magnetic field then induces an electric current in the wireless energy receiving coil 23, thereby enabling contactless energy transfer between the endoscope body 21 and the system master 51. Consequently, power is supplied to the endoscope body 21 through wireless transmission. In other embodiments, the system master 51 (e.g., the second bidirectional communication device 12) includes the wireless energy receiving coil 53, and the endoscope body 21 (e.g., the first bidirectional communication device 11) includes the wireless energy transmitting coil 23 to enable contactless energy transfer along a direction from the first bidirectional communication device 11 to the second bidirectional communication device 12.

In some embodiments, as shown in FIG. 16, an endoscope body (e.g., the endoscope body 21 in FIG. 3) includes an endoscope communication connector 24, a system master (e.g., the system master 51 in FIG. 8) includes a system master communication connector 54, and an input end of the endoscope communication connector 24 may be connected to an output end of the system master communication connector 54. An endoscope communication board (e.g., the endoscope communication board 22 in FIG. 15) is provided in the endoscope communication connector 24, and a system master communication board (e.g., the system master communication board 52 in FIG. 15) is provided in the system master communication connector 54. When the input end of the endoscope communication connector 24 is connected to the output end of the system master communication connector 54 (e.g., a connection port 541), the endoscope communication board 22 can engage in bidirectional communication with the system master communication board 52, thereby realizing bidirectional transmission of signals between the endoscope body 21 and the system master 51. As an example only, as shown in FIG. 17 and FIG. 18, when the input end of the endoscope communication connector 24 is embedded in the output end of the system master communication connector 54 (e.g., the connection port 541), the first bidirectional communication device 11 and the second bidirectional communication device 12 are arranged opposite, and contactless communication connection is maintained between the first bidirectional communication device 11 and the second bidirectional communication device 12. For example, the wireless energy transmitting coil 53 may be provided on a power supply board (not shown in the drawings) of the system master communication connector 54, and the wireless energy receiving coil 23 may be provided on a power supply board of the endoscope communication connector 24, and the wireless energy transmitting coil 53 and the wireless energy receiving coil 23 are concentrated and placed on one side, thereby saving space.

It should be noted that the wireless energy transmitting coil 53 and the wireless energy receiving coil 23 are not unique in how they are set up in the endoscope system 100. For example, in the embodiments shown in FIG. 19 and FIG. 20, the wireless energy transmitting coil 53 may be provided on a power supply board of the system master communication connector 54, and the wireless energy receiving coil 23 may be provided on a power supply board of the endoscope communication connector 24. The plane where the wireless energy transmitting coil 53 and the wireless energy receiving coil 23 are arranged may be parallel to a cross-section along a length direction of the system master communication connector 54 and the endoscope communication connector 24, which also saves space.

In some embodiments, as shown in FIG. 17 and FIG. 18, a system master (e.g., the system master 51 in FIG. 13) further includes a light guide rod 55 and an air nozzle 56, and an endoscope body (e.g., the endoscope body 21 in FIG. 15) further includes a light conductor (e.g., an optical fiber). The light guide rod 55 is configured to connect a light source to an interior of the endoscope body. The light conductor is configured to connect the interior of the endoscope body to a distant end of the endoscope body (e.g., an end of the endoscope that penetrates deeper into a patient), delivering a light source from the interior of the endoscope body to the distant end of the endoscope body to provide illumination once the endoscope penetrates deep into the patient. The air nozzle 56 is configured to connect the interior of the endoscope body to the external environment, delivering air to the interior of the endoscope body. As an example, only, the output end of the system master communication connector 54 includes the light guide rod 55 and the air nozzle 56. In this regard, the light guide rod 55 may be configured to direct a light source in a system master of the endoscope system 100 to an endoscope body of the endoscope system 100, which in turn transmits visible light to a distant end of the endoscope body to illuminate the patient's body through a light conductor provided in the endoscope body. The air nozzle 56 may be configured to supply air to the endoscope body 21, dilate the lumen of the patient, and remove water droplets from an optical lens (e.g., the first optical lens 214 in FIG. 3) of the endoscope body.

Beneficial effects of the first bidirectional communication device and the bidirectional communication system provided herein include, but are not limited to: (1) since the first optical lens includes a collimating lens and/or a diverging lens, and the second optical lens includes a collimating lens and/or a diverging lens, beams transmitted from the first optical lens and the second optical lens are parallel beams and/or diverged beams. Compared to focused beams (e.g., beams with a focal point), parallel beams and/or diverged beams can travel a greater distance. This results in a long maximum distance of data transmission between the system master (e.g., a system master of an endoscope system) and the system slave (e.g., an endoscope body of an endoscope system), avoiding the impact of the distance between the system master and the endoscope body on the quality of the transmission signal and allowing for flexible adjustment of the distance between the system master and the endoscope body; (2) as the optical signal has a long beam transmission distance, there is no need to additionally set up optical fibers and fiber optic adapters, which not only simplifies the structure of a bidirectional communication system (e.g., an endoscope system), but also reduces the manufacturing cost; (3) by coupling the second optical signal and the first optical signal, it is possible to make a bidirectional signal between a system master (e.g., a system master of an endoscope system) and a system slave (e.g., an endoscope body) may be transmitted within the same communication link, reducing the count of required communication links and improving the integration of the bidirectional communication system (e.g., an endoscope system); (4) through the cooperation of the first diverging lens and the first collimating lens, as well as the cooperation of the second diverging lens and the second collimating lens, the optical signal transmitted from the first signal transmitter is diverged and collimated. Even when there is a deviation between the center axis (e.g., the main ray) of the beam of the first optical signal and the center axis of the beam of the second optical signal, data transmission with the target reception power may still be maintained, which enables reduced requirements for installation accuracy while ensuring communication efficiency.

The basic concepts have been described above, and it will be apparent to those skilled in the art that the foregoing detailed disclosure serves only as an example and does not constitute a limitation of the present disclosure. Although not explicitly stated here, those skilled in the art may make various modifications, improvements, and amendments to the present disclosure. These alterations, improvements, and modifications are intended to be suggested by the present disclosure, and are within the spirit and scope of the exemplary embodiments of the present disclosure.

Moreover, certain terminology has been used to describe embodiments of the present disclosure, as "an embodiment," "one embodiment,", and/or " some embodiments" means a feature, structure, or characteristic associated with at least one embodiment of the present disclosure. Accordingly, it should be emphasized and noted that two or more references to "an embodiment," or "one embodiment," or "an alternative embodiment" in different places in the present disclosure do not necessarily refer to the same embodiment. In addition, some features, structures, or features in the present disclosure of one or more embodiments may be appropriately combined.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. However, the present disclosure does not mean that the present disclosure object requires more features than the features mentioned in the claims. Rather, claimed subject matter may lie in less than all features of a single foregoing disclosed embodiment.

Numbers describing the number of components, attributes, and properties are used in some embodiments, and it is to be understood that such numbers used in the description of embodiments are modified in some examples by the modifiers "about," "approximately," or "substantially". Unless otherwise noted, the terms "about", "approximately", or "substantially" indicates that a ±20% variation in the stated number is allowed. Correspondingly, in some embodiments, the numerical parameters used in the present disclosure and claims are approximations, which approximations are subject to change depending on the desired characteristics of individual embodiments. In some embodiments, the numerical parameters should consider the specified number of valid digits and utilize a general digit retention method. While the numerical domains and parameters used to confirm the breadth of their ranges in some embodiments of the present disclosure are approximations, in specific embodiments such values are set to be as precise as possible within a feasible range.

For each patent, patent application, patent application disclosure, and other material cited in the present disclosure, such as articles, books, specifications, publications, documents, or the like, the entire contents of which are hereby incorporated herein by reference. Except for application history documents that are inconsistent with or conflict with the contents of the present disclosure, and except for documents (currently or hereafter appended to the present disclosure) that limit the broadest scope of the claims of the present disclosure. It should be noted that in the event of any inconsistency or conflict between the descriptions, definitions, and/or use of terms in the materials appurtenant to the present disclosure and those set forth herein, the descriptions, definitions, and/or use of terms in the present disclosure shall prevail.

At last, it should be understood that the embodiments described in the present disclosure are merely illustrative of the principles of the embodiments of the present disclosure. Other modifications that may be employed may be within the scope of the present disclosure. Thus, by way of example, but not of limitation, alternative configurations of the embodiments of the present disclosure may be utilized in accordance with the teachings herein. Accordingly, embodiments of the present disclosure are not limited to that precisely as shown and described.

## Claims

1. A first bidirectional communication device applied to a bidirectional communication system, the first bidirectional communication device comprising:
a first signal transmitter, configured to transmit a first optical signal;
a first signal receiver, configured to receive a second optical signal transmitted from a second bidirectional communication device of the bidirectional communication system;
a first beam splitter, configured to transmit at least a portion of the first optical signal and reflect at least a portion of the second optical signal; and
a first optical lens, located between the first beam splitter and the second bidirectional communication device, the first optical lens including a collimating lens and/or a diverging lens.

2. The first bidirectional communication device according to claim 1, wherein the first optical lens includes a first collimating lens configured to collimate the first optical signal and couple the second optical signal.

3. The first bidirectional communication device according to claim 1, wherein the first optical lens includes a first diverging lens configured to diverge the first optical signal and couple the second optical signal.

4. The first bidirectional communication device according to any one of claims 1 to 3, wherein:
the first optical lens includes a first collimating lens and a first diverging lens;
the first diverging lens is configured to diverge the first optical signal, and transmit the diverged first optical signal to be incident on the first collimating lens;
the first collimating lens is configured to collimate the first optical signal; and
the first collimating lens and the first diverging lens are further configured to couple the second optical signal.

5. The first bidirectional communication device according to claim 2 or claim 4, wherein:
along a direction of a center axis of the second optical signal,
a projection area of the second optical signal on the first collimating lens is a first area;
a lens area of the first collimating lens is a second area; and
a ratio of the first area to the second area is greater than or equal to a first predetermined ratio.

6. The first bidirectional communication device according to any one of claims 1 to 5, wherein a cross-sectional dimension of a beam of the first optical signal at an emission end surface of the first optical lens is a first cross-sectional dimension, a cross-sectional dimension of the beam of the first optical signal at an incident end surface of the first optical lens is a second cross-sectional dimension, and the first cross-sectional dimension is greater than the second cross-sectional dimension.

7. The first bidirectional communication device according to any one of claims 1 to 4, wherein a divergence angle of a beam of the first optical signal transmitted from the first optical lens is a first divergence angle, and a divergence angle of the beam of the first optical signal incident on the first optical lens is a second divergence angle, and the first divergence angle is greater than the second divergence angle.

8. The first bidirectional communication device according to any one of claims 1 to 7, wherein both the first optical signal and the second optical signal include at least one wavelength, and wavelengths included in the first optical signal and the second optical signal are not entirely identical.

9. The first bidirectional communication device according to claim 8, wherein both the first optical signal and the second optical signal include one wavelength, and wavelengths of the first optical signal and the second optical signal are different.

10. The first bidirectional communication device according to claim 8, wherein both the first optical signal and the second optical signal include a plurality of wavelengths, and the first optical signal and the second optical signal include at least one different wavelength.

11. The first bidirectional communication device according to any one of claims 1 to 10, further comprising a first filter, wherein the first filter is disposed at an emission end of the first signal transmitter and is configured to filter the first optical signal to obtain a filtered first optical signal, such that the filtered first optical signal and the second optical signal includes at least one different wavelength; and/or
the first bidirectional communication device further comprising a second filter, wherein the second filter is disposed at an incident end of the first signal receiver and is configured to filter the second optical signal to obtain a filtered second optical signal, such that the filtered second optical signal and the first optical signal includes at least one different wavelength.

12. The first bidirectional communication device according to any one of claims 1 to 10, wherein a sensitive range of the first signal receiver and a sensitive range of a second signal receiver of the second bidirectional communication device are completely independent and do not overlap.

13. The first bidirectional communication device according to any one of claims 1 to 7, wherein both the first optical signal and the second optical signal include a plurality of identical wavelengths, and a sensitive range of the first signal receiver and a sensitive range of a second signal receiver of the second bidirectional communication device are completely independent and do not overlap.

14. The first bidirectional communication device according to any one of claims 1 to 13, wherein the first beam splitter is further configured to reflect at least a portion of the second optical signal to the first signal receiver.

15. The first bidirectional communication device according to any one of claims 1 to 14, wherein the first beam splitter is configured to fully transmit the first optical signal and fully reflect the second optical signal to the first signal receiver.

16. The first bidirectional communication device according to any one of claims 1 to 15, wherein an angle between the first beam splitter and a center axis of the first signal transmitter is 45 degrees.

17. The first bidirectional communication device according to any one of claims 1 to 16, further comprising a second beam splitter, wherein the second beam splitter is disposed at an incident end of the first signal receiver and is configured to isolate the first signal receiver from interference from an external signal.

18. The first bidirectional communication device according to claim 17, wherein an angle between the second beam splitter and a center axis of the first signal transmitter is 0 degrees.

19. The first bidirectional communication device according to any one of claims 1 to 18, further comprising a first isolator, wherein the first isolator is located at an emission end of the first signal transmitter and is configured to isolate the first signal transmitter from interference from an external signal.

20. The first bidirectional communication device according to any one of claims 1 to 19, wherein a divergence angle of the first optical signal transmitted from the first optical lens and a divergence angle of the second optical signal are the same.

21. The first bidirectional communication device according to any one of claims 1 to 20, wherein the first bidirectional communication device includes a wireless energy receiving coil, and the second bidirectional communication device includes a wireless energy transmitting coil, and the wireless energy transmitting coil and the wireless energy receiving coil are arranged in correspondence to achieve contactless energy transfer; or,
the first bidirectional communication device includes the wireless energy transmitting coil, and the second bidirectional communication device includes the wireless energy receiving coil, and the wireless energy transmitting coil and the wireless energy receiving coil are arranged in correspondence to achieve contactless energy transfer.

22. A bidirectional communication system, comprising a first bidirectional communication device and a second bidirectional communication device configured to realize contactless bidirectional communication with the first bidirectional communication device, the first bidirectional communication device comprising:
a first signal transmitter, configured to transmit a first optical signal;
a first signal receiver, configured to receive a second optical signal transmitted from the second bidirectional communication device;
a first beam splitter, configured to transmit at least a portion of the first optical signal and reflect at least a portion of the second optical signal; and
a first optical lens, including a collimating lens and/or a diverging lens;
the second bidirectional communication device including:
a second signal transmitter, configured to transmit the second optical signal;
a second signal receiver, configured to receive the first optical signal transmitted from the first bidirectional communication device;
a third beam splitter, configured to transmit at least a portion of the second optical signal and reflect at least a portion of the first optical signal; and
a second optical lens, including a collimating lens and/or a diverging lens.

23. The bidirectional communication system according to claim 22, wherein the first optical lens includes a first collimating lens, configured to collimate the first optical signal and couple the second optical signal.

24. The bidirectional communication system according to claim 22, wherein the first optical lens includes a first diverging lens, configured to diverge the first optical signal and couple the second optical signal.

25. The bidirectional communication system according to any one of claims 22 to 24, wherein the first optical lens includes a first collimating lens and a first diverging lens, wherein the first diverging lens is configured to diverge the first optical signal, and transmit the diverged first optical signal to be incident on the first collimating lens, the first collimating lens is configured to collimate the first optical signal, and the first collimating lens and the first diverging lens are further configured to couple the second optical signal.

26. The bidirectional communication system according to any one of claims 22 to 25, wherein the second optical lens includes a second collimating lens configured to collimate the second optical signal and couple the first optical signal.

27. The bidirectional communication system according to any one of claims 22 to 25, wherein the second optical lens includes a second diverging lens configured to diverge the second optical signal and couple the first optical signal.

28. The bidirectional communication system according to any one of claims 22 to 27, wherein the second optical lens includes a second diverging lens and a second collimating lens, the second diverging lens is configured to diverge the second optical signal, and transmit the diverged second optical signal to be incident on the second collimating lens, the second collimating lens is configured to collimate the second optical signal, and the second collimating lens and the second diverging lens are further configured to couple the first optical signal.

29. The bidirectional communication system according to any one of claims 22 to 28, wherein a divergence angle of the first optical signal transmitted from the first optical lens and a divergence angle of the second optical signal transmitted from the second optical lens are the same.

30. The bidirectional communication system according to any one of claims 22 to 29, wherein the first optical splitter is also configured to reflect at least a portion of the second optical signal to the first signal receiver; and/or
the third optical splitter is further configured to reflect at least a portion of the first optical signal to the second signal receiver.

31. The bidirectional communication system according to any one of claims 22 to 30, wherein the first bidirectional communication device further includes a second optical splitter, the second optical splitter is located at an incident end of the first signal receiver and is configured to isolate the first signal receiver from interference from an external signal; and/or,
the second bidirectional communication device further includes a fourth optical splitter, the fourth optical splitter is located at an incident end of the second signal receiver and is configured to isolate the second signal receiver from interference from the external signal.

32. The bidirectional communication system according to any one of claims 22 to 31, wherein the first bidirectional communication device further includes a first isolator, the first isolator is located at an emission end of the first signal transmitter and is configured to isolate the first signal transmitter from interference from the external signal; and/or,
the second bidirectional communication device further includes a second isolator, the second isolator is located at an emission end of the second signal transmitter and is configured to isolate the second signal transmitter from interference from the external signal.

33. The bidirectional communication system according to any one of claims 22 to 32, wherein the first bidirectional communication device comprises a wireless energy receiving coil, and the second bidirectional communication device includes a wireless energy transmitting coil, and the wireless energy transmitting coil and the wireless energy receiving coil are arranged in correspondence to achieve contactless energy transfer; or,
the first bidirectional communication device comprises the wireless energy transmitting coil, and the second bidirectional communication device includes the wireless energy receiving coil, and the wireless energy transmitting coil and the wireless energy receiving coil are arranged in correspondence to achieve contactless energy transfer.

34. The bidirectional communication system according to any one of claims 22 to 33, wherein the first bidirectional communication device includes a light guide rod and a gas nozzle, the first bidirectional communication device includes a light conductor, the light guide rod connects a light source with an interior of the first bidirectional communication device, the light conductor connects the interior of the first bidirectional communication device with a distal end of the first bidirectional communication device, and the gas nozzle connects the first bidirectional communication device with external environment.
